(19)

Europäisches
Patentamt
European
Patent Office
Office européen
des brevets

(11)  **EP 3 809 744 A1**

(12)  **EUROPEAN PATENT APPLICATION**
published in accordance with Art. 153(4) EPC

(43) Date of publication:
**21.04.2021 Bulletin 2021/16**

(21) Application number: **18922203.7**

(22) Date of filing: **15.06.2018**

(51) Int Cl.:
**H04W 24/10** (2009.01)    **H04W 16/28** (2009.01)

(86) International application number:
**PCT/JP2018/022933**

(87) International publication number:
**WO 2019/239583 (19.12.2019 Gazette 2019/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NTT DoCoMo, Inc.**
**Tokyo 100-6150 (JP)**

(72) Inventors:
• **MATSUMURA, Yuki**
  **Tokyo 100-6150 (JP)**
• **KAKISHIMA, Yuichi**
  **Tokyo 100-6150 (JP)**
• **NAGATA, Satoshi**
  **Tokyo 100-6150 (JP)**

(74) Representative: **Hoffmann Eitle**
**Patent- und Rechtsanwälte PartmbB**
**Arabellastraße 30**
**81925 München (DE)**

(54)  **USER TERMINAL AND WIRELESS COMMUNICATION METHOD**

(57)    A user equipment according to an aspect of the present disclosure includes: a receiving section configured to perform measurement on the basis of configuration information regarding measurement for channel state information (CSI); and a transmitting section configured to transmit the CSI including information regarding interference based on the measurement. According to an embodiment of the present disclosure, it is possible to perform appropriate measurement/report of CSI for beam selection.

FIG. 3

**Description**

Technical Field

The present disclosure relates to a user equipment and a radio communication method in next-generation mobile communication systems.

Background Art

In the universal mobile telecommunications system (UMTS) network, the specifications of long-term evolution (LTE) have been drafted for the purpose of further increasing high speed data rates, providing lower delays and so on (see Non Patent Literature 1). In addition, the specifications of LTE-A (LTE Advanced, LTE Rel. 10, 11, 12, 13) have been drafted for the purpose of further increasing the capacity and sophistication of LTE (LTE Rel. 8, 9) .

Successor systems of LTE are also under study (also referred to as, for example, "future Radio Access (FRA)," "5th generation mobile communication system (5G)," "5G+ (plus)," "new radio (NR)," "new radio access (NX)," "future generation radio access (FX)," "LTE Rel. 14" or "LTE Rel. 15 or later versions" and so on).

In the existing LTE system (e.g., LTE Rel.8-13), user terminal (user equipment (UE)) transmits channel state information (CSI) to a base station in a periodic and/or aperiodic manner. The UE transmits the CSI via a physical uplink control channel (PUCCH) and/or a physical uplink shared channel (PUSCH).

Citation List

Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

In future radio communication systems (e.g., NR), beam management (BM) and beam failure recovery (BFR) are considered. For this, beam selection based on reference signal received power (RSRP) in the physical layer (layer 1) (L1-RSRP) is considered.

However, in a case where the beam selection for BM/BFR is based only on L1-RSRP, no favorable beam is likely to be selected, which leads to a decrease in communication throughput.

Thus, the present disclosure is intended to provide user equipment and radio communication method as one of objects, which are capable of performing appropriate measurement/report of CSI for beam selection.

Solution to Problem

A user equipment according to an aspect of the present disclosure includes: a receiving section configured to perform measurement on the basis of configuration information regarding measurement for channel state information (CSI); and a transmitting section configured to transmit the CSI including information regarding interference based on the measurement.

Advantageous Effects of Invention

According to an embodiment of the present disclosure, it is possible to perform appropriate measurement/report of CSI for beam selection.

Brief Description of Drawings

Fig. 1 is a diagram illustrating an example in which beam selection based on L1-RSRP is likely to be inappropriate.
Fig. 2 is a diagram illustrating another example in which beam selection based on L1-RSRP is likely to be inappropriate.

Fig. 3 is a diagram illustrating an example of an interference measurement resource and an interference report resource.

Figs. 4A and 4B are diagrams illustrating an example of an L1-RSRP measurement resource and an interference measurement resource in a given slot.

Figs. 5A and 5B are diagrams illustrating an example of a reception beam of a UE for a measurement resource set for which repetition is set to "on".

Figs. 6A and 6B are diagrams illustrating an example of a reception beam of a UE for a measurement resource set in which repetition is set to "off".

Figs. 7A and 7B are diagrams illustrating an example of a transmission beam of a base station assumed by a UE for a measurement resource set for which repetition is set to "on".

Figs. 8A and 8B are diagrams illustrating an example of a transmission beam of a base station assumed by a UE for a measurement resource set for which repetition is set to "off".

Fig. 9 is a diagram illustrating an example of a schematic configuration of a radio communication system according to an embodiment.

Fig. 10 is a diagram illustrating an example of an overall configuration of a radio base station according to an embodiment.

Fig. 11 is a diagram illustrating an example of a functional configuration of a radio base station according to an embodiment.

Fig. 12 is a diagram illustrating an example of an overall configuration of user equipment according to an embodiment.

Fig. 13 is a diagram illustrating an example of a functional configuration of user equipment according to an embodiment.

Fig. 14 is a diagram illustrating an example of a hardware configuration of a radio base station and user equipment according to an embodiment.

Description of Embodiments

In NR, the UE measures a channel state by using a certain reference signal (or a resource for the reference signal). The reference signal used for channel state measurement can be referred to as a channel state information-reference signal (CSI-RS). Moreover, the UE can measure the channel state using other signals than CSI-RS (e.g., such as synchronization signal/physical broadcast channel (SS/PBCH) blocks, synchronization signals, and reference signals for demodulation).

The CSI-RS resource can include at least one of non-zero power (NZP) CSI-RS and CSI-interference management (IM). In addition, the SS/PBCH block is a block including a primary synchronization signal (PSS), a secondary synchronization signal (SSS), and a PBCH, and it can be called an SS block or the like.

The UE feeds back (reports) the channel state information (CSI) to a base station (e.g., can also be called as a base station (BS), transmission/reception point (TRP), eNB (eNodeB), gNB (NR NodeB), etc.) at a certain timing on the basis of the measurement result of the reference signal or the like.

Moreover, the CSI can include at least one of a channel quality indicator (CQI), a precoding matrix indicator (PMI), a CSI-RS resource indicator (CRI), an SS/PBCH block resource indicator (SSBRI), a layer indicator (LI), a rank indicator (RI), L1-RSRP (layer 1 reference signal received power), and so on.

The CSI can have multiple parts. The first part of CSI (CSI part 1) can include information with a relatively small number of bits (e.g., RI). The second part of CSI (CSI part 2) can include information having a relatively large number of bits (e.g., CQI) such as information determined on the basis of the CSI part 1.

As a method of feeding back CSI, (1) periodic CSI (P-CSI) report, (2) aperiodic CSI (A-CSI) report, and (3) semi-persistent (or semi-permanent) CSI (SP-CSI) report are being considered.

The UE can be notified of information regarding a resource for reporting at least one CSI of P-CSI, SP-CSI, and A-CSI (also referred to as CSI report configuration information) using higher layer signaling, physical layer signaling (e.g., downlink control information (DCI)), or a combination thereof.

Here, the higher layer signaling may be, for example, any of radio resource control (RRC) signaling, Medium Access Control (MAC) signaling, broadcast information and so on, or a combination thereof.

For the MAC signaling, for example, a MAC control element (MAC CE), a MAC protocol data unit (PDU), or the like may be used. The broadcast information may be, for example, a master information block (MIB), a system information block (SIB), a minimum system information (Remaining Minimum System Information (RMSI)), other system information (OSI), or the like.

The CSI report configuration information can include, in one example, information regarding a report period, an offset, or the like, which can be represented by a certain time unit (such as units of slot, units of subframe, and units of symbol). The CSI report configuration information can include a configuration ID (CSI-ReportConfigId), which enables the type of CSI reporting method (such as whether or not it is SP-CSI) and a parameter including the report period to be specified. The CSI report configuration information can include information indicating which reference signal (or which reference signal resource) is used to report the measured CSI (CSI-ResourceConfigId).

By the way, so far, in Rel-15 NR, beam management (BM) and beam failure recovery (BFR) are considered. The beam selection is considered to be based on L1-RSRP. On the other hand, a single TRP is assumed to be used in Rel-15 NR.

However, in the case of assuming a plurality of TRPs, it is considered that beam selection based on L1-RSRP is not appropriate.

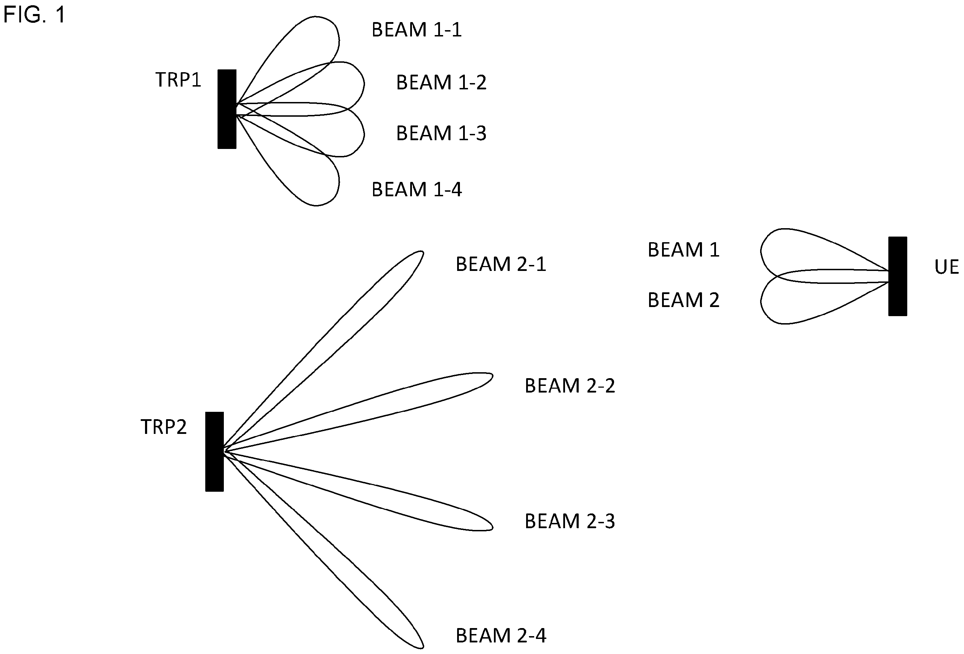

Fig. 1 is a diagram illustrating an example in which beam selection based on L1-RSRP is likely to be inappropriate. In this example, two TRPs (TRP1 and TRP2) and UE are illustrated. Each of TRP1 and TRP2 is capable of performing transmission and reception using four beams. In this example, the number of antenna elements of TRP2 in Fig. 1 is larger than that of TRP1, so TRP2 is capable of forming a thinner and longer beam (higher directivity) than TRP1.

Moreover, the term of TRP can be herein used interchangeably with a panel. In other words, TRP1 and TRP2 can be different panel1 and panel2.

In the example of Fig. 1, in the case of performing the beam selection based on L1-RSRP (power) for the UE, the beam of TRP2, instead of TRP1, is typically selected. However, the beam of TRP2 is thinner, so the UE is liable to frequently cause beam failure.

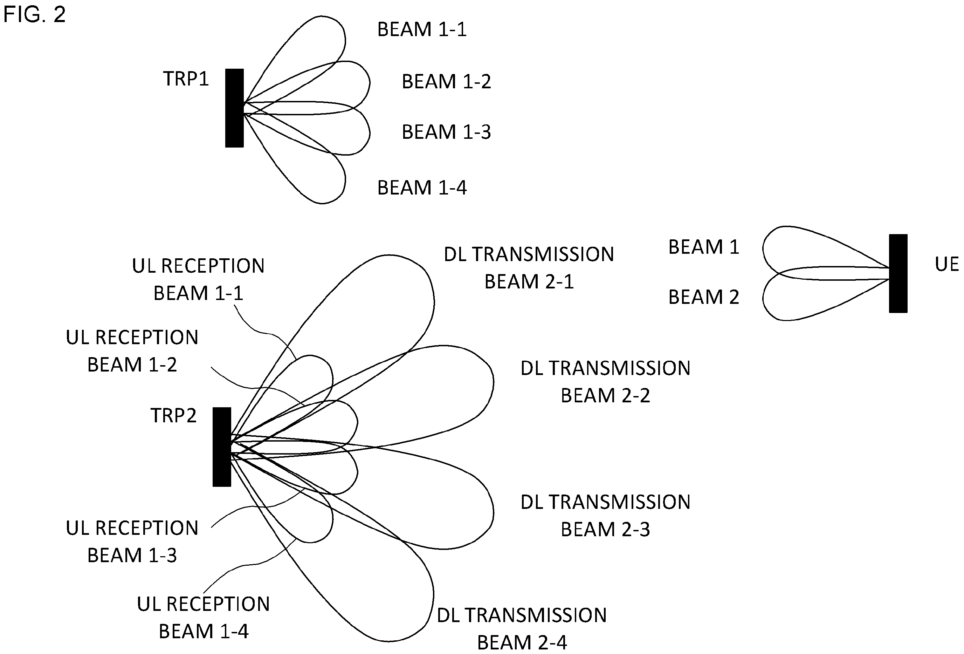

Fig. 2 is a diagram illustrating another example in which beam selection based on L1-RSRP is likely to be inappropriate. The example of Fig. 2 differs from that of Fig. 1 in that TRP2 has larger DL transmission power than TRP1 instead of the number of antenna elements. Thus, the UL reception beam of TRP2 is the same size as the transmission/reception beam of TRP1, while the DL transmission beam of TRP2 is larger than the transmission or reception beam of TRP1. Moreover, in TRP2, the DL transmission beam and the UL reception beam can have different configurations (such as number, direction, and pattern of beams).

In the example of Fig. 2, in the case of performing the beam selection based on L1-RSRP (power) for the UE, the beam of TRP2, instead of TRP1, is typically selected. However, from the view of traffic offload, it is desirable that some UEs select the beam from TRP1 rather than all UEs select the beam from TRP2.

Further, if the UE selects a UL transmission beam on the basis of DL L1-RSRP on the assumption that there is beam correspondence, an appropriate UL transmission beam is sometimes not be selected.

As described above, in a case where the beam selection for BM/BFR is based only on L1-RSRP, no favorable beam is likely to be selected. As the result, there is a possibility that a decrease in communication throughput occurs.

Thus, the present inventors have conceived a CSI reporting method for appropriate beam selection.

Hereinafter, embodiments according to the present disclosure will be described in detail with reference to the drawings. The radio communication method according to each of the embodiments may be applied independently, or may be applied in combination with others.

The terms "interference" and "interference power" can be herein used interchangeably. The term "interference" can be used interchangeably with an SINR, SNR, RSRQ, or other indices regarding interference (e.g., any indices other than L1-RSRP).

Information regarding L1-RSRP and interference can be transmitted using PUCCH, PUSCH, or other uplink channels.

(Radio Communication Method)

<First Embodiment>

In the first embodiment, the UE performs beam management based on L1-RSRP. However, it is possible for the UE not to necessarily report L1-RSRP having interference larger than a certain threshold to a network (e.g., a base station).

The UE can be notified of the information regarding the certain threshold using higher layer signaling, physical layer signaling, or a combination thereof.

The UE can report a certain number of L1-RSRPs in the case of configuring a resource for L1-RSRP measurement (e.g., SS/PBCH block resource or CSI-RS resource). In this case, the L1-RSRP to be reported can be a certain number of L1-RSRPs from the larger ones of them.

The UE can report a certain number of L1-RSRPs among the L1-RSRPs for which interference is smaller than the above-mentioned certain threshold in the case of configuring a resource for interference measurement. In this case, the L1-RSRP to be reported can be a certain number of L1-RSRP from the larger ones among the L1-RSRPs for which interference is smaller than the certain threshold value.

The UE can be notified of the information regarding the certain number using higher layer signaling, physical layer signaling, or a combination thereof.

Moreover, the resource for interference measurement is herein used interchangeably with at least one of an interference measurement resource (IMR), a CSI interference measurement (CSI-IM) resource, a zero power (ZP) CSI-RS resource, a non-zero power (NZP) CSI-RS resource, an SS/PBCH block resource, and so on.

The interference power (also referred to as L1 interference power) can be based on, in one example, a linear average of total received power (in watts) over N resource blocks from all sources in the measurement bandwidth, which are observed only in a symbol (e.g., OFDM symbol) corresponding to a time resource for interference measurement. In this regard, all sources can include serving cell channels, non-serving cell channels, interference between adjacent channels, thermal noise, and so on. The L1 interference power can also be referred to as a L1-received signal strength indicator (L1-RSSI).

Moreover, the term of L1 interference power is interchangeable with NR carrier RSSI, CSI-RSSI, or the like. In one example, in the case where the L1-RSRP measurement resource or the interference measurement resource corresponds to the SS/PBCH block, the L1 interference power is interchangeable with the NR carrier RSSI. In the case where the L1-RSRP measurement resource or the interference measurement resource corresponds to CSI-RS, the L1 interference power is interchangeable with CSI-RSSI.

The information regarding the certain threshold can be information regarding an offset from a desired beam. The offset can be a negative value. The UE can specify the desired beam by at least one of a certain index (e.g., beam index, CSI-RS ID, or SS/PBCH block index), beam (signal/channel) resource, and the like.

The UE can be notified of the information regarding at least one of the certain beam and the offset using higher layer signaling, physical layer signaling, or a combination thereof.

The UE can calculate the threshold used to determine the L1-RSRP to be reported using Formula (1) below:

```
Formula (1)

Threshold = RSRP of desired beam + offset
```

The use of Formula (1) makes it possible to perform an operation such as feeding back L1-RSRP regarding a weak beam (beam index) of 25 dB or more from the desired beam (S), enabling reporting for beam management to be performed more flexibly.

The first embodiment described above makes it possible to limit L1-RSRP reported by using the CSI to a low interference value, so a beam with small interference can be selected without transmitting another interference measurement result other than L1-RSRP.

<Second Embodiment>

In the second embodiment, the UE does not report L1-RSRP for beam management. On the other hand, the interference reporting for BM is performed. The report regarding interference (hereinafter, also simply referred to as interference report) can include, in one example, information regarding interference such as SINR and RSRQ (also referred to as interference information reported in the CSI, L1 interference information, and so on. hereinafter, also simply referred to as interference information).

The UE can calculate interference information by performing measurement regarding interference (also referred to as interference measurement or L1 interference measurement, or the like and hereinafter also referred to as interference measurement for brevity) to transmit the interference report, instead of L1-RSRP, to a base station. The base station can determine at least one beam on the basis of the report from the UE to configure the determined beam for the relevant UE. Here, the determined beam can be at least one of a UL reception beam of the base station, a DL transmission beam of the base station, a UL transmission beam of the UE, and a DL reception beam of the UE.

Moreover, the interference information can be expressed with the prefix "L1-" attached. In one example, the interference information corresponding to RSRQ and the interference information corresponding to SINR can be referred to as L1-RSRQ and L1-SINR, respectively.

The interference information can be calculated on the basis of at least one of L1-RSRP and L1 interference power. In one example, the L1-RSRQ can be defined as a ratio of "N × L1-RSRP" and "L1 interference power". Here, N can be the number of resource blocks in the measurement bandwidth of the L1 interference power. In the case where the L1 interference power is CSI-RSSI, "L1-RSRQ = N × L1-RSRP / CSI-RSSI".

The beam selection method can have a mechanism similar to that of at least one of beam management and BFR in Rel-15 NR. In other words, at least one of the base station and the UE can use interchangeably the L1-RSRP with the interference information described above in the Rel-15 NR beam management and BFR, and can transmit the interference report.

According to the second embodiment described above, it is possible to omit the L1-RSRP reporting, resulting in the achievement of the interference report with a small amount of CSI information.

<Third Embodiment>

In the third embodiment, the UE can transmit the L1-RSRP and the interference report. The RSRQ and SINR can be set to low in the case where there is significant interference, or the interference can be set to vary for each slot or for each symbol. Even in the case where the optimal beam with the highest RSRQ (SINR) is selected, the beam is likely to be not optimal in the next slot/symbol. In the third embodiment, it is possible to select a more appropriate beam by reporting both L1-RSRP and interference information.

The UE performs measurement for L1-RSRP and transmits L1-RSRP to a base station. The base station can determine at least one beam on the basis of the report from the UE and configure it for the relevant UE. The base station can determine at least a TCI state on the basis of the report from the UE and configure it for the relevant UE.

In one example, in the case where the UE is configured with an SS/PBCH block or a CSI-RS resource for L1-RSRP measurement (or calculation) via higher layer signaling, the UE can measure L1-RSRP using the configured resource to report the L1-RSRP for beam management.

Further, the UE can be configured to perform interference report. In one example, in the case where a parameter regarding the quality of the report(reportQuantity), which is included in the received CSI report configuration information (CSI-ReportConfig information element of RRC signaling) indicates interference information, the UE can determine that it is configured to perform interference report.

In the case where the UE is configured to perform interference report, the UE can perform interference measurement and transmit the interference report to the base station. The base station can determine at least one beam on the basis of the report (L1-RSRP and interference information) from the UE.

In one example, there can be a case where the UE uses a higher layer signaling to be configured with a first measurement resource (SS/PBCH block or CSI-RS resource) for L1-RSRP measurement (or calculation) and a second measurement resource (SS/PBCH block or CSI-RS resource) for interference measurement (or calculation). In this case, the UE can measure L1-RSRP using the first measurement resource, measure interference using the second measurement resource, and report the L1-RSRP and interference information for beam management.

According to the third embodiment described above, it is possible to report appropriately the L1-RSRP and the interference information using the CSI.

<Configuration of Measurement/Reporting>

Although the description below is given of the configuration of measurement/report on the basis of the third embodiment, at least a part of the configurations can be similarly used for the first and second embodiments. In one example, the configuration of interference measurement and interference report in the second embodiment can be similar to the configuration of interference measurement and interference report in the third embodiment.

In the case where the first number of L1-RSRP measurement resources is configured in the higher layer, the UE can measure the first number of L1-RSRP measurement resources. The UE can report the second number of L1-RSRPs that satisfies a certain condition (e.g., a larger value) among the measurement results (L1-RSRP) corresponding to the first number of L1-RSRP measurement resources. In one example, the first number can be 64 and the second number can be 4.

The configuration information for the first number of L1-RSRP measurement (e.g., can include information of ID, measurement resource position (such as cycle)), the information regarding the second number, and the like are configured (notified) in the UE by using higher layer signaling, physical layer signaling, or a combination thereof.

In the case where the third number of interference measurement resources is configured in the higher layer, the UE can measure the third number of interference measurement resources. The UE can report the fourth number of measurement results satisfying a certain condition (e.g., a smaller value) among the measurement results (such as RSRQ) corresponding to the third number of interference measurement resources. In one example, the third number = 64 and the fourth number = 4.

The configuration information for the third number of interference measurement (e.g., can include information of ID, measurement resource position (such as cycle)), the information regarding the fourth number, and the like are configured (notified) in the UE by using higher layer signaling, physical layer signaling, or a combination thereof.

Even in the case where the third number of interference measurement resources is configured in the higher layer, the UE can measure, among the third number of interference measurement resources, at least one of the first or second number of L1-RSRP measurement resources and the fifth number of interference measurement resources that is quasi-co-location (QCL). In one example, the fifth number = 2 or 4.

The QCL is herein an index showing the statistical properties of the channel. In one example, in the case where the first signal and the second signal are QCLed (quasi-co-located), which means that at least one of Doppler shift, Doppler spread, average delay, delay spread, and spatial parameter (e.g., spatial reception parameter or spatial Rx parameter) is assumable to be the same between these different signals (QCL for at least one of these) of them. The term "signal" is interchangeable with a channel, a resource, or the like.

Moreover, the spatial reception parameter can correspond to the reception beam of the UE (e.g., reception analog beam), and the beam can be specified on the basis of the spatial QCL. The QCL and at least one element of the QCL are herein used interchangeably with sQCL (spatial QCL).

The QCL can be specified as a plurality of types (QCL types). In one example, four QCL types A to D of different parameters (or parameter sets) that are assumable to be identical can be provided, which parameters are shown below:

- QCL type A: Doppler shift, Doppler spread, average delay, and delay spread
- QCL type B: Doppler shift and Doppler spread
- QCL type C: average delay and Doppler shift
- QCL type D: spatial reception parameter

The UE can configure information regarding the QCL relationship between a certain interference measurement resource or a signal transmitted on the resource and a particular L1-RSRP measurement resource or a signal transmitted on the resource, by using higher layer signaling or the like.

The UE can assume that a certain interference measurement resource or a signal transmitted on the resource is QCLed with a particular L1-RSRP measurement resource or a signal transmitted on the resource. In one example, the UE can assume that the signal transmitted on a certain interference measurement resource is QCLed with the L1-RSRP measurement signal transmitted at the same timing.

Moreover, one resource and the other resource located at the same (or overlapping) timing can means that the start symbols of these resources are the same or these resources overlap at least partially in the time domain.

The UE can report the fifth number of measurement results satisfying a certain condition (e.g., interference is smaller (from smaller one) and L1-RSRP is larger (from larger one)) among measurement results obtained using the interference measurement resource QCLed with at least one of the configured L1-RSRP measurement resources (or L1-RSRP measurement resources for which corresponding L1-RSRP is reported).

The information or the like regarding the fifth number can be configured (notified) in the UE by using higher layer signaling, physical layer signaling, or a combination thereof.

Moreover, the UE may not measure (or may omit a measurement process of) the interference measurement resource not QCLed with any of the first number or the second number of L1-RSRP measurement resources, among the third number of interference measurement resources.

The UE can receive configuration information for L1-RSRP reporting (e.g., can include information on ID, report resource position (such as timing offset)). In one example, the UE can report the measured L1-RSRP using a resource based on the information.

The UE can receive configuration information for interference reporting (e.g., can include information on ID, report resource position (such as timing offset)). In one example, the UE can report the measured interference using a resource based on the information.

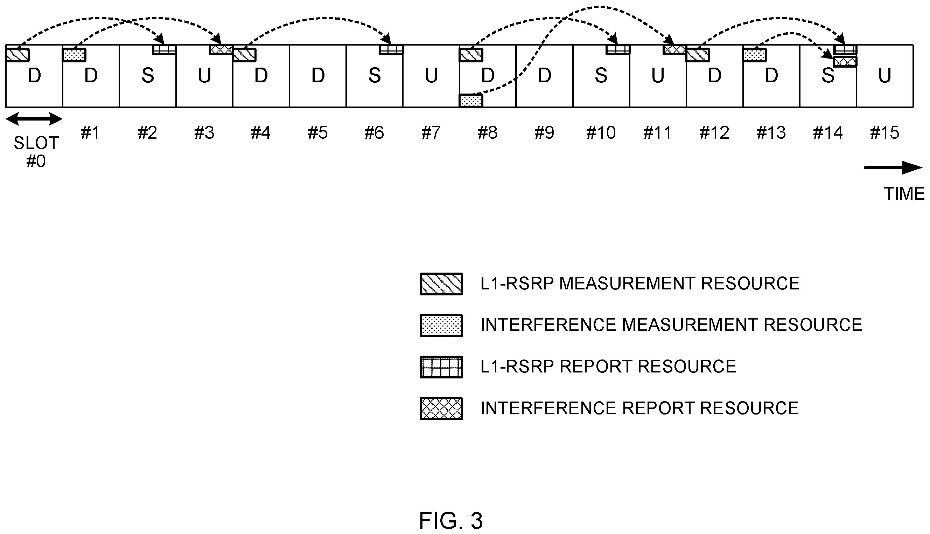

Fig. 3 is a diagram illustrating an example of an interference measurement resource and an interference report resource. In this example, the UE is configured with the L1-RSRP measurement resource having a 4-slot cycle starting from a slot (#0). In addition, the UE is configured with the L1-RSRP report resource so that the UE is capable of reporting the L1-RSRP two slots after the slot of the L1-RSRP measurement resource.

The interference measurement resource can be configured to be located at a different timing (e.g., different slot or different symbol) from the L1-RSRP measurement resource or can be configured to be located at the same (or overlapping) timing. In addition, the interference report resource can be configured to be located at different timings from the L1-RSRP report resource or can be configured to be located at the same (or overlapping) timing.

In one example, as illustrated in Fig. 3, the interference measurement resource can be included in a slot (#1) adjacent to a slot (#0) including the L1-RSRP measurement resource. The interference measurement resource can be included in the same slot (#8) as the slot in which the L1-RSRP measurement resource is included.

Further, as illustrated in Fig. 3, the interference report resource can be included in a slot (#3) adjacent to a slot (#2) including the L1-RSRP report resource. The interference report resource can be included in the same slot (#14) as the slot in which the L1-RSRP report resource is included.

In the case where the interference measurement resource and the L1-RSRP measurement resource are included in the same slot, the corresponding interference information and the corresponding L1-RSRP can be reported on the same slot or different slots.

In the case where the interference report resource and the L1-RSRP report resource are included in the same slot, the interference measurement resource and the L1-RSRP measurement resource respectively corresponding to the interference information and L1-RSRP reported by these resources can be included in the same slot or different slots.

The UE can be configured with a plurality of CSIs (multi-CSI) report resources. In the case where the interference report resource and the L1-RSRP report resource are included in the same slot, the UE can use the plurality of CSI report resources to transmit both the interference information and the L1-RSRP.

There may be a case where at least one of the interference report resource and the L1-RSRP report resource overlaps with the reporting timing of another CSI. In this case, if the configured report resources of the plurality of CSIs fail to include all overlapping reports (e.g., all CSIs), the UE can drop at least one report in accordance with the certain priority rule.

The certain priority rule can be associated with a priority value related to CSI reporting. In one example, the priority value can be defined using the function $Pri_{iCSI}$ (y, k, c, s).

In this function, y can be a value based on the type of CSI report (A-CSI report, SP-CSI report, or P-CSI report) and the channel (PUSCH or PUCCH) for transmitting the CSI report. In one example, y can be 0 for PUSCH-based A-CSI report, y can be 1 for PUSCH-based SP-CSI report, y can be 2 for PUCCH-based SP-CSI report, and y can be 3 for PUCCH-based P-CSI report.

In this function, k can be a value based on whether or not the CSI report includes L1-RSRP (e.g., k = 0 for the CSI report including L1-RSRP and k =1 for the CSI report that does not include L1-RSRP). In the function, c can be a serving cell index. Further, s can be a configuration ID (reportConfigID).

In one example, the priority value can be obtained as $Pri_{iCSI}$ (y, k, c, s) = 2 · * $N_{cells}$ * $M_s$ * y + $N_{cells}$ * $M_s$ * k + $M_s$ * c + s. Here, "$N_{cells}$" can be a value of the maximum number of configured serving cells (higher layer parameter maxNrofServingCells), and "$M_s$" can be a value of the maximum number of configured CSI report configurations (higher layer parameter maxNrofCSI-ReportConfigurations).

In the case where the value of $Pri_{iCSI}$ (y, k, c, s) in the first CSI report is less than the value of $Pri_{iCSI}$ (y, k, c, s) in the second CSI report, it means that the first CSI report has a higher priority than that of the second CSI report. Moreover, the priority value may be calculated on the basis of another definition.

Even in the case where the values of $Pri_{iCSI}$ (y, k, c, s) are the same in the first and second CSI reports, the UE can determine that the first CSI report has a higher priority than the second CSI report when the first CSI report includes interference information and the second CSI report does not include interference information. In one example, in the case where the CSI report includes interference information, it can determine that k = -1.

Alternatively, the UE can use a new priority calculation formula in consideration of whether or not the CSI report includes interference information. In one example, a new calculation formula can be expressed as follows:

$$Pri_{iCSI}(y,k,j,c,s) = 2 * N_{cells} * M_s * y + N_{cells} * M_s * k + N_{cells} * M_s * j + M_s * c + s$$

Here, "j" can be a value based on whether or not the CSI report includes interference information (e.g., j = 0 for the CSI report including interference information and j = 1 for the CSI report that does not include interference information).

It is assumed that the UE uses the above-mentioned $Pri_{iCSI}$ (y, k, j, c, s) to calculate priority in the case where interference measurement or reporting is configured in a higher layer, and otherwise uses the above-mentioned $Pri_{iCSI}$ (y,k,c,s) to calculate the priority.

In the case where a plurality of CSI report resources is not configured or the configured report resources are failed to report more than one CSI (insufficient capacity), the UE can either use one of L1-RSRP report resource and interference report resource to transmit one of the L1-RSRP and the interference information and drop the other.

In the case where a plurality of CSI report resources is not configured or the configured report resources are failed to report more than one CSI (insufficient capacity), the UE can either use one of L1-RSRP report resource and interference report resource to transmit one of the L1-RSRP and the interference information and drop the other.

Further, there may be a case where resources for reporting a plurality of CSIs are not configured or the configured report resources are failed to report more than one CSI (insufficient capacity). In this case, if one of the L1-RSRP report resource and the interference report resource has a capacity capable of reporting M L1-RSRP values (M beams), the UE can use the resource having the capacity to transmit m values of L1-RSRPs and M-m pieces of interference information. Here, in one example, M can be 4 and m can be 2.

Moreover, the interference report resource and the L1-RSRP report resource included in the same slot can mean that these resources are included in the same slot of one component carrier (CC) or they are included in the same slot of a plurality of CCs.

<Method of representing interference report>

The description below is given how to represent the information included in the interference report (CSI report).

The interference report can include information (e.g., such as L1-RSRP and L1 interference power) for calculating the interference information or can include interference information itself (e.g., such as L1-RSRQ and L1-SINR) .

At least one of the L1-RSRP and the L1 interference power can be represented by a certain number of bits (e.g., 7 bits), and by these bits, a certain range (e.g., [-140, - 44] dBm range) can be represented with a certain step size (e.g., 1 dB step size).

In the case where a plurality of L1-RSRPs is included in the interference report, in one example, the L1-RSRP corresponding to the largest measurement value can be represented by the certain number of bits (e.g., 7 bits). The other L1-RSRPs can be represented as difference from the largest measurement value with bits (e.g., 4 bits) less than the certain number.

The arrangement order of the L1-RSRPs included in the interference report can be the descending order or the ascending order of the measurement values, or can be the descending order or the ascending order of the indices of the configured measurement or report (e.g., the reporting configuration ID (CSI-ReportConfigId) and the measurement configuration ID (CSI-ResourceConfigId)).

In the case where a plurality of L1 interference power is included in the interference report, in one example, the L1 interference power corresponding to the smallest or the largest measurement value can be represented by the certain number of bits (e.g., 7 bits). The other L1 interference power can be represented as difference from the smallest or the largest measurement value with bits (e.g., 4 bits) less than the certain number.

Further, the L1 interference power can be represented as difference (a relative value) from L1-RSRP included in the same interference report. In this case, one of the L1 interference power values included in the interference report can be represented as difference from L1-RSRP, and the other L1 interference power values can be represented as difference from the L1 interference power.

The arrangement order of the L1 interference power or the interference information itself included in the interference report can be the descending order or the ascending order of the measurement values, or can be the descending order or the ascending order of the indices of the configured measurement or report.

The arrangement order of the L1 interference power values included in the interference report can be the order in which the corresponding L1 interference power values are arranged in the arrangement order of the L1-RSRPs power included in the same interference report.

Moreover, the UE can determine whether or not to include at least one of L1 interference power and interference information in the CSI report on the basis of whether or not at least one of interference measurement and interference report resources is configured, or the configuration of interference beam report (can be RRC parameter "interference-BeamReporting"). In one example, in the case where the CSI-RS resource for interference measurement is configured or the interference beam reporting is configured to "enabled" (interferenceBeamReporting = "enabled") via the higher layer signaling, the UE can report the CSI including L1 interference power or interference information.

<Assumption regarding measurement resource>

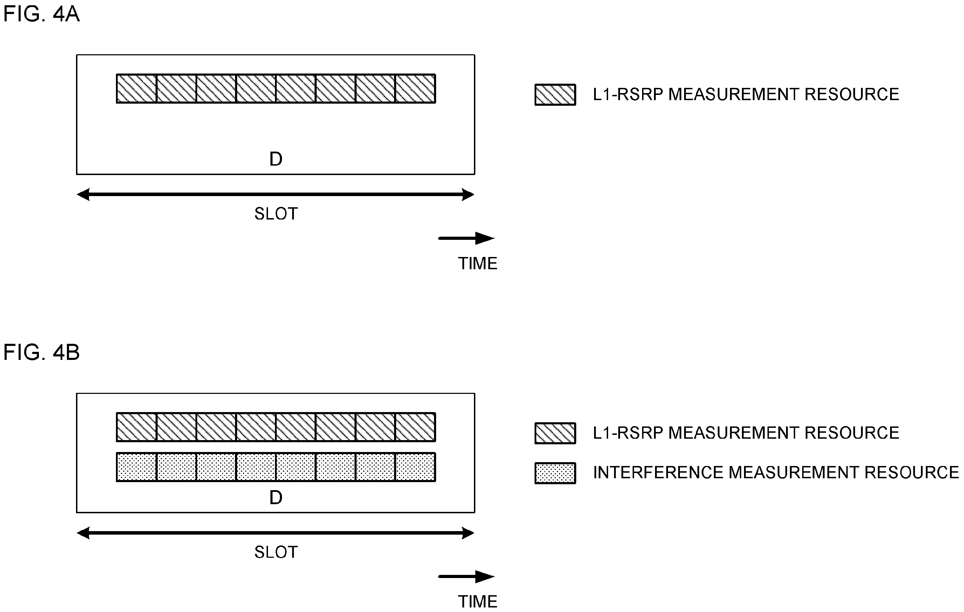

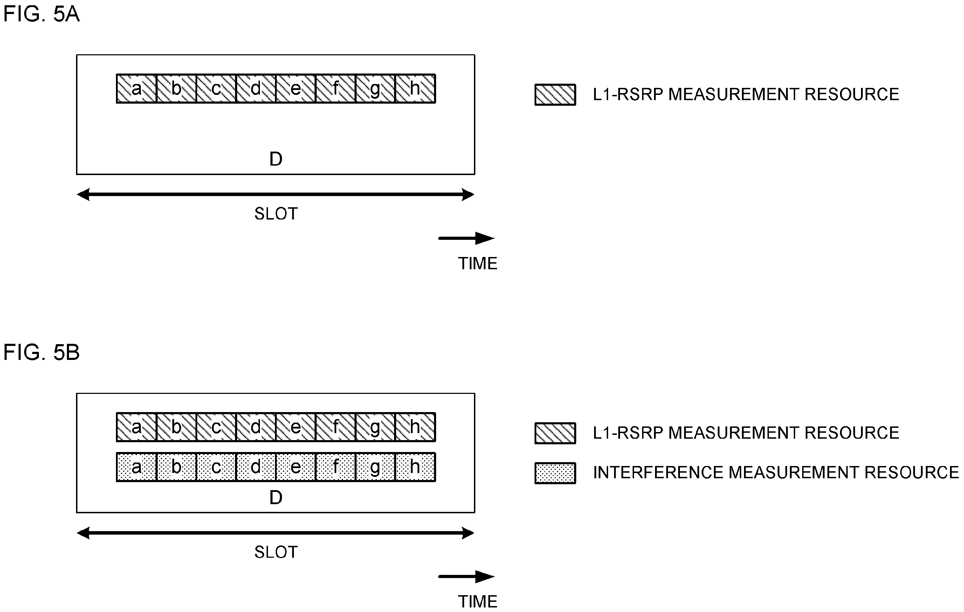

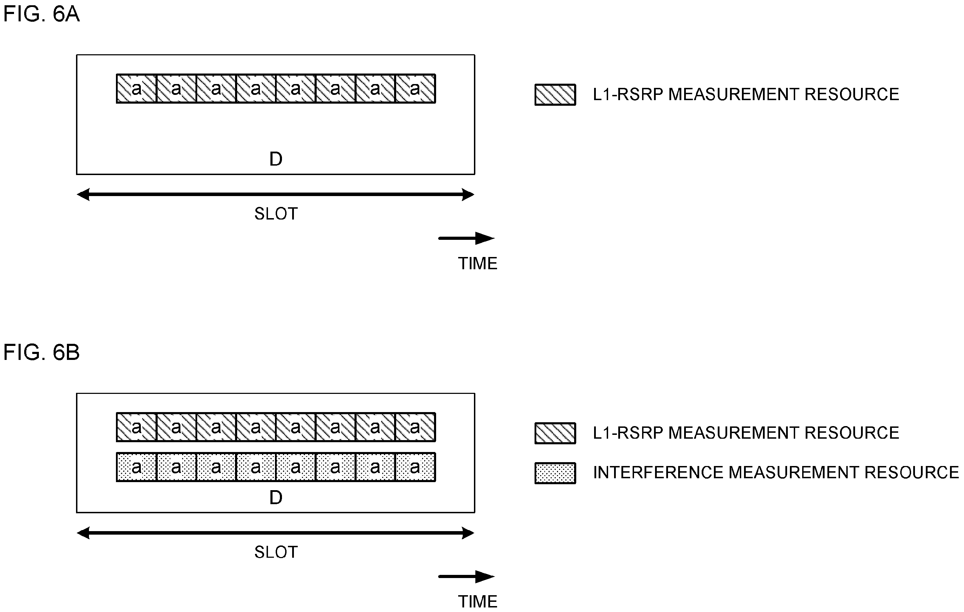

Figs. 4A and 4B are diagrams illustrating an example of an L1-RSRP measurement resource and an interference measurement resource in a given slot. As illustrated in Fig. 4A, L1-RSRP measurement using a plurality of time resources (symbols) in one slot can be configured in the UE. As illustrated in Fig. 4B, interference measurement using a plurality of time resources (symbols) in one slot can be configured in the UE. Moreover, in this example and in Figs. 5 and 6 described later, one slot (DL slot) illustrated can be a plurality of slots, one or more symbols, or the like.

The UE can receive the CSI measurement configuration information (such as CSI-MeasConfig information element and CSI-ResourceConfig information element) including the configuration of one or more measurement resource sets (e.g., CSI-RS resource sets) via higher layer signaling.

The configuration information (CSI-MeasConfig or CSI-ResourceConfig) of the CSI measurement report can include information such as one or more NZP CSI-RS resource sets (NZP-CSI-RS-ResourceSet), one or more ZP CSI-RS resource sets (ZP- CSI-RS-ResourceSet) (or CSI-IM resource set (CSI-IM-ResourceSet)), and one or more SS/PBCH block resource sets (CSI-SSB-ResourceSet).

Information of each resource set can include information regarding repetition in resources in the resource set. The information regarding the repetition can be indicated, in one example, as "on (enabled or valid)" or "off (disabled or invalid)".

In one example, for a resource set (e.g., NZP CSI-RS resource set or ZP CSI-RS resource set) for which repetition is set to "on", the UE can assume that the resources in the resource set are transmitted using the same downlink spatial domain transmission filter. In this case, the UE can assume that the resources in the resource set are transmitted using the same beam (e.g., using the same beam from the same TRP).

For a resource set (e.g., NZP CSI-RS resource set or ZP CSI-RS resource set) for which repetition is set to "off", the UE can perform control so that the resources in the resource set are necessary not to be (or may not be necessarily) transmitted using the same downlink spatial domain transmission filter. In this case, the UE can assume that the resources in the resource set are not transmitted using the same beam (i.e., transmitted using different beams).

In other words, the UE can assume that the base station performs beam sweeping for a resource set for which repetition is set to "off".

Figs. 5A and 5B are diagrams illustrating an example of a reception beam of a UE for a measurement resource set for which repetition is set to "on". Figs. 6A and 6B are diagrams illustrating an example of a reception beam of a UE for a measurement resource set in which repetition is set to "off". The resources in these examples are similar to those of Figs. 4A and 4B, but the reception beams (beams a-h) used by the UE in each resource are denoted. In one example, the beams a to h can correspond to analog beam indices different from each other.

The L1-RSRP measurement resources in Figs. 5A and 6A correspond to the NZP CSI-RS resource sets that are configured in the higher layer. The interference measurement resources in Figs. 5B and 6B correspond to the ZP CSI-RS resource sets that are configured in the higher layer.

As illustrated in Figs. 5A and 5B, the UE can receive (measure) resources within the NZP/ZP CSI-RS resource set for which repetition is set to "on" using different reception beams for each certain time (e.g., a symbol that can be units of repetition). In this case, the measurement can be achieved by fixing the DL transmission beam of the base station and varying (sweeping) the DL reception beam of the UE. Thus, it is possible to determine appropriately the optimal reception beam of the UE for a particular transmission beam of the base station.

As illustrated in Figs. 6A and 6B, the UE can receive (measure) the resources in the NZP/ZP CSI-RS resource set for which repetition is set to "off" using the same reception beam. In this case, the measurement can be achieved by varying (sweeping) the DL transmission beam of the base station and fixing the DL reception beam of the UE, so it is possible to determine appropriately the optimal transmission beam of the base station for the particular reception beam of the UE.

Moreover, in the case where, for a resource set for which information regarding repetition is not configured, the resource in the resource set overlaps with the resource in another resource set, the UE can determine that the assumption of repetition of the resource set is the same as the assumption of repetition of the other resource set.

In one example, in Figs. 5B and 6B, even in the case where the repetition is configured in only one of the NZP and ZP CSI-RS resource sets, the UE can measure, in the period in which the measurement of the one resource set is performed, the other resource set, using the same reception beam (also means that the same spatial reception parameter is assumed).

Moreover, in the case where the base station uses (performs beam sweeping) different beams for a plurality of resources in the measurement resource set, the UE can control these resources to be measured. Otherwise, the UE can control these resources not to be measured. It can be expected that the control enables an appropriate DL transmission beam of the base station to be preferably specified. Moreover, the control is applicable to either one of the L1-RSRP measurement resource set (e.g., NZP CSI-RS resource set) or the interference measurement resource set (e.g., ZP CSI-RS resource set), or is applicable to both.

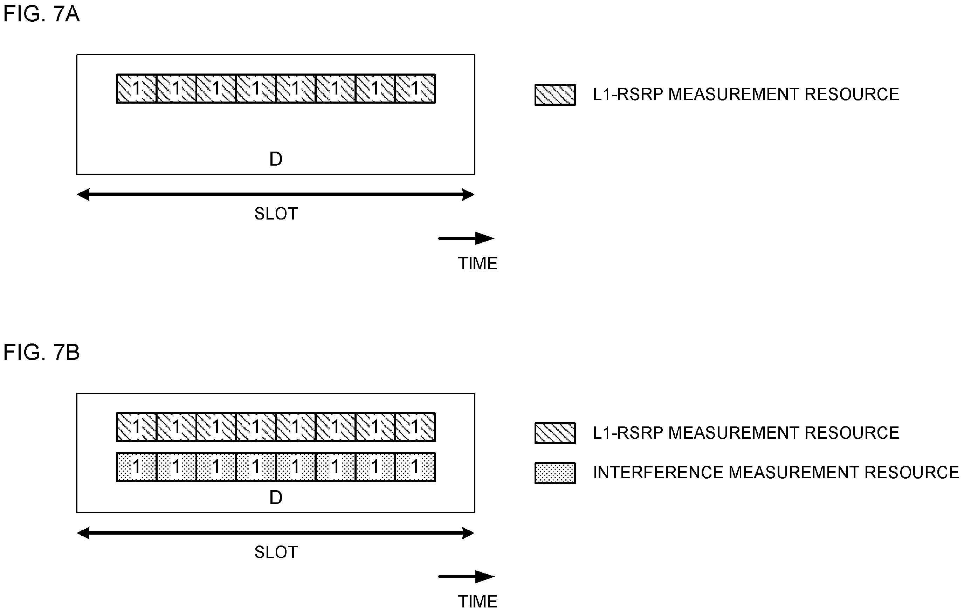

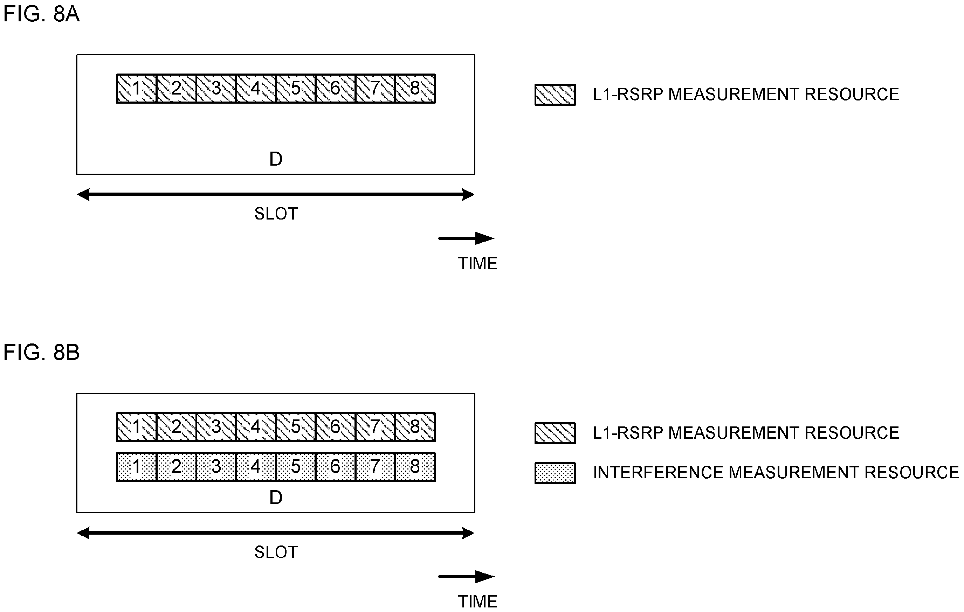

Figs. 7A and 7B are diagrams illustrating an example of a transmission beam of a base station assumed by a UE for a measurement resource set for which repetition is set to "on". Figs. 8A and 8B are diagrams illustrating an example of a transmission beam of a base station assumed by a UE for a measurement resource set for which repetition is set to "off". The resources in these examples are similar to those of Figs. 4A and 4B, but the transmission beams (beams 1 to 8) used by the base station (gNB) in each resource are denoted. In one example, the beams 1 to 8 can correspond to analog beam indices different from each other.

The UE can assume that the resources in the resource set for which repetition is set to "on" are transmitted using the same beam, as illustrated in Figs. 7A and 7B. In this case, the UE can control so that the resources in the NZP/ZP CSI-RS resource set for which repetition is set to "on" are necessary not to be (or may not be necessarily) measured.

The UE can assume that the resources in the resource set for which repetition is set to "off" are transmitted using the different beam, as illustrated in Figs. 8A and 8B. In this case, the UE can control so that the resources in the NZP/ZP CSI-RS resource set for which repetition is set to "off" are necessary to be (or may) measured.

Moreover, conversely, in the case where the base station uses different beams for a plurality of resources in the measurement resource set, the UE can control so that these resources are not to be measured. Otherwise, the UE can control so that these resources are to be measured. The control is applicable to either one of the L1-RSRP measurement resource set or the interference measurement resource set, or is applicable to both.

<Modification>

In the embodiments described above, the reporting of L1-RSRP and interference for a beam by UE can also mean that the UE performs reporting of a plurality of types (e.g., a plurality piece of CSI information) for the beam.

Moreover, in the case where at least one of the L1-RSRP measurement resource or the interference measurement resource is configured, the UE can perform at least one of rate matching processing or puncturing processing for data (e.g., PDSCH) during a period including the resource (e.g., can be interchangeable with a slot, a resource block, etc.).

(Radio Communication System)

Now, a configuration of a radio communication system according to one embodiment of the present disclosure will be described below. In this radio communication system, communication is performed using one or a combination of the radio communication methods according to the embodiments of the present disclosure.

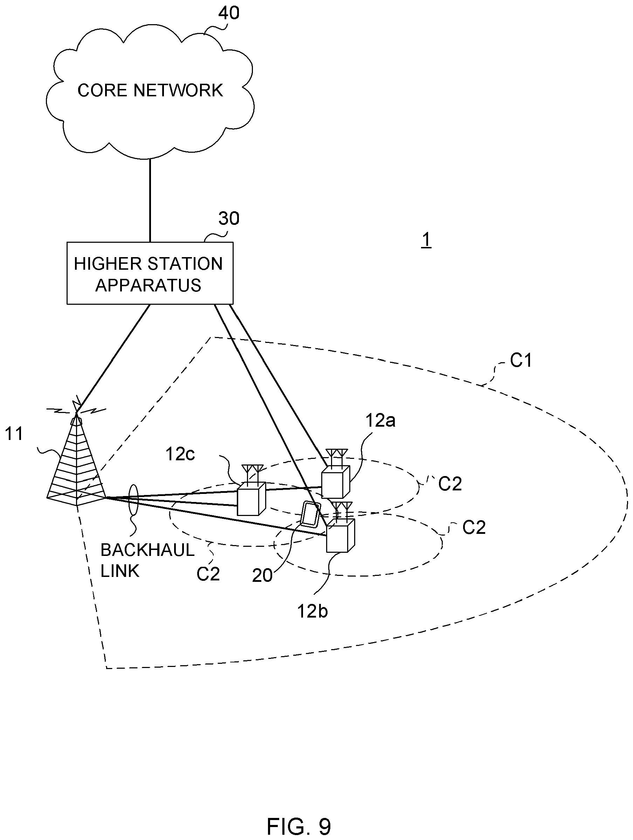

Fig. 9 is a diagram illustrating an example of a schematic configuration of a radio communication system according to an embodiment. In the radio communication system 1, at least one of carrier aggregation (CA) and dual connectivity (DC) in which a plurality of basic frequency blocks (component carriers) each having a system bandwidth (e.g., 20 MHz) of the LTE system as one unit is integrated can be applied.

Note that the radio communication system 1 may be referred to as "Long Term Evolution (LTE)," "LTE-Advanced (LTE-A)," "LTE-Beyond (LTE-B)," "SUPER 3G," "IMT-Advanced," "4th generation mobile communication system (4G)," "5th generation mobile communication system (5G)," "New Radio (NR)," "Future Radio Access (FRA)," "New-Radio Access Technology (RAT)," and so on, or may be seen as a system to implement these.

The radio communication system 1 includes a radio base station 11 that forms a macro cell C1 covering a relatively wide coverage, and radio base stations 12 (12a to 12c) that are placed within the macro cell C1 and that form small cells C2, which are narrower than the macro cell C1. Also, user equipment 20 is placed in the macro cell C1 and in each small cell C2. The arrangement, number and so on of cells and user equipment 20 are not limited to those illustrated in the drawings.

The user equipment 20 can connect with both the radio base station 11 and the radio base stations 12. It is assumed that the user equipment 20 uses the macro cell C1 and the small cells C2 at the same time using CA or DC. Furthermore, the user equipment 20 may apply CA or DC using a plurality of cells (CCs).

Between the user equipment 20 and the radio base station 11, communication can be carried out using a carrier of a relatively low frequency band (for example, 2 GHz) and a narrow bandwidth (referred to as an "existing carrier," a "legacy carrier" and so on). Meanwhile, between the user equipment 20 and the radio base stations 12, a carrier of a relatively high frequency band (for example, 3.5 GHz, 5 GHz, and so on) and a wide bandwidth may be used, or the same carrier as that used between the user equipment 20 and the radio base station 11 may be used. Note that the structure of the frequency band for use in each radio base station is by no means limited to these.

Further, the user equipment 20 is capable of performing communication in each cell using at least one of time division duplex (TDD) and frequency division duplex (FDD). Further, in each cell (carrier), a single numerology may be applied, or a plurality of different numerologies may be applied.

The numerology can be a communication parameter applied to at least one of transmission and reception of a certain signal or channel. The numerology can indicate, in one example, at least one of subcarrier spacing, bandwidth, symbol length, cyclic prefix length, subframe length, TTI duration, the number of symbols per TTI, the radio frame configuration, particular filtering processing performed by the transceiver in frequency domains, particular windowing processing performed by a transceiver in time domains, and so on.

In one example, for a certain physical channel, in the case where at least one of the subcarrier spacing of the constituent OFDM symbols and the number of OFDM symbols is different, it can be said that the numerology is different.

The radio base station 11 and the radio base station 12 (or between 2 radio base stations 12) may be connected by wire (for example, means in compliance with the common public radio interface (CPRI) such as optical fiber, an X2 interface, and so on) or wirelessly.

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," an "aggregate node," an "eNB (eNodeB)," a "transmitting/receiving point" and so on. Also, the radio base stations 12 are radio base stations having local coverages, and may be referred to as "small base stations," "micro base stations," "pico base stations," "femto base stations," "Home eNodeBs (HeNBs)," "remote radio heads (RRHs)," "transmitting/receiving points" and so on. Hereinafter the radio base stations 11 and 12 will be collectively referred to as "radio base stations 10," unless specified otherwise.

The user equipment 20 is terminals to support various communication schemes such as LTE, LTE-A and so on, and may be either mobile communication terminals (mobile stations) or stationary communication terminals (fixed stations).

In the radio communication system 1, as a radio access method, orthogonal frequency division multiple access (OFDMA) is applied to the downlink, and at least one of single carrier-frequency division multiple access (SC-FDMA) and OFDMA is applied to the uplink.

OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are not limited to the combinations of these, and other radio access schemes can be used as well.

In the radio communication system 1, a physical downlink shared channel (PDSCH), a physical broadcast channel (PBCH), a downlink control channel, and the like, which are shared by each user equipment 20, are used as the downlink channel. User data, higher layer control information and System Information Blocks (SIBs) are transmitted in the PDSCH. Further, Master Information Block (MIB) is transmitted by PBCH.

The downlink control channels include a physical downlink control channel (PDCCH), an enhanced physical downlink control channel (EPDCCH), a physical control format indicator channel (PCFICH), a physical hybrid-ARQ indicator channel (PHICH), and so on. The use of PDCCH causes downlink control information (DCI) or the like including scheduling information of at least one of PDSCH and PUSCH to be transmitted.

DCI that schedules receipt of DL data may also be referred to as "DL assignment," and DCI that schedules transmission of UL data may also be referred to as "UL grant."

The use of PCFICH can cause the number of OFDM symbols used for the PDCCH to be transmitted. The PHICH can cause hybrid automatic repeat request (HARQ) delivery acknowledgement information (e.g., such as retransmission control information, HARQ-ACK, and ACK/NACK) for the PUSCH to be transmitted. The EPDCCH is frequency-division-multiplexed with the PDSCH (downlink shared data channel) and used to communicate DCI and so on, like the PDCCH.

In the radio communication system 1, an uplink shared channel (Physical Uplink Shared Channel (PUSCH)), which is used by each user equipment 20 on a shared basis, an uplink control channel (Physical Uplink Control Channel (PUCCH)), a random access channel (Physical Random Access Channel (PRACH)) and so on are used as uplink channels. User data, higher layer control information, and so on are communicated by the PUSCH. Also, in the PUCCH, downlink radio quality information (Channel Quality Indicator (CQI)), delivery acknowledgment information, scheduling requests (SRs) and so on are transmitted. By means of the PRACH, random access preambles for establishing connections with cells are transmitted.

In the radio communication systems 1, cell-specific reference signals (CRSs), channel state information reference signals (CSI-RSs), demodulation reference signals (DMRSs), positioning reference signals (PRSs) and so on are transmitted as downlink reference signals. Also, in the radio communication system 1, measurement reference signals (Sounding Reference Signals (SRSs)), demodulation reference signals (DMRSs), and so on are communicated as uplink reference signals. Note that, DMRSs may be referred to as "user equipment-specific reference signals (UE-specific Reference Signals)." Also, the reference signals to be communicated are by no means limited to these.

(Radio Base Station)

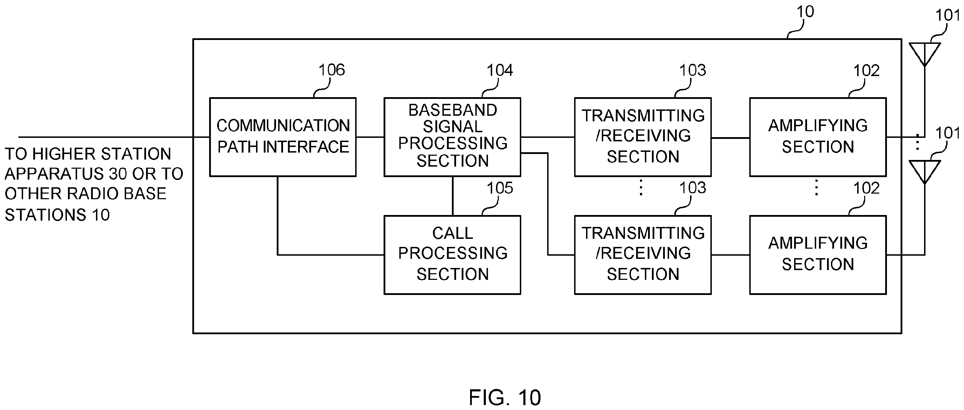

Fig. 10 is a diagram illustrating an example of an overall configuration of a radio base station according to an embodiment. A radio base station 10 has a plurality of transmitting/receiving antennas 101, amplifying sections 102, transmitting/receiving sections 103, a base band signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a user equipment 20 on the downlink is input from the higher station apparatus 30 to the base band signal processing section 104, via the communication path interface 106.

In the base band signal processing section 104, the user data is subjected to transmission processes, including a Packet Data Convergence Protocol (PDCP) layer process, division and coupling of the user data, Radio Link Control (RLC) layer transmission processes such as RLC retransmission control, Medium Access Control (MAC) retransmission control (for example, a Hybrid Automatic Repeat reQuest (HARQ) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to the transmitting/receiving sections 103.

Base band signals that are pre-coded and output from the base band signal processing section 104 on a per antenna basis are converted into a radio frequency band in the transmitting/receiving sections 103, and then transmitted. A radio frequency signal subjected to the frequency conversion in each transmitting/receiving section 103 is amplified in the amplifying section 102, and transmitted from each transmitting/receiving antenna 101. The transmitting/receiving sections 103 can be constituted by a transmitter/receiver, a transmitting/receiving circuit or transmitting/receiving apparatus that can be described based on general understanding of the technical field to which the present disclosure pertains. Note that a transmitting/receiving section 103 may be structured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the base band signal through frequency conversion in the transmitting/receiving sections 103 and output to the base band signal processing section 104.

In the base band signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (such as setting up and releasing communication channels), manages the state of the radio base stations 10 and manages the radio resources.

The communication path interface 106 transmits and receives signals to and from the higher station apparatus 30 via a certain interface. Also, the communication path interface 106 may transmit and receive signals (backhaul signaling) with other radio base stations 10 via an inter-base station interface (which is, for example, optical fiber that is in compliance with the Common Public Radio Interface (CPRI), the X2 interface, etc.).

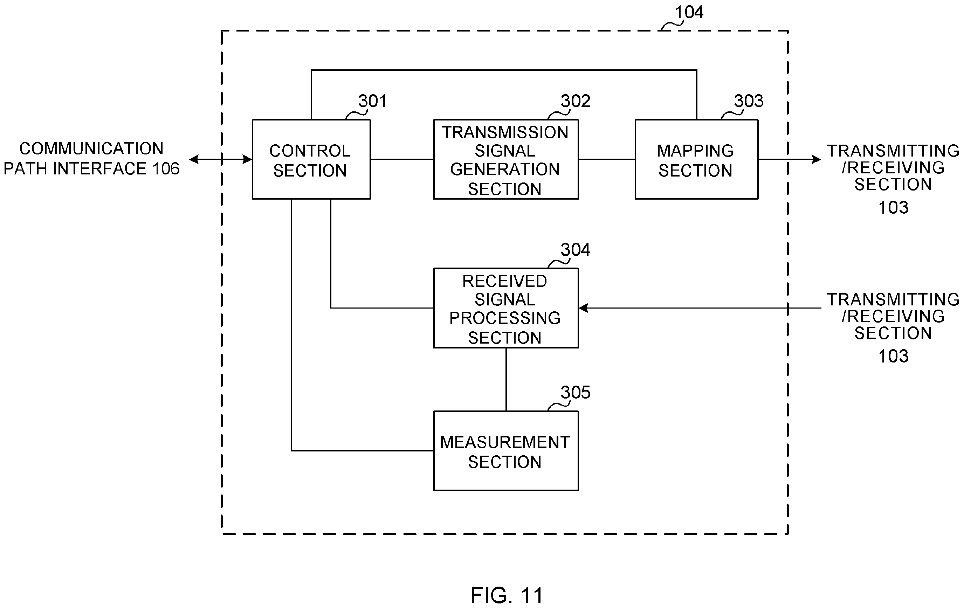

Fig. 11 is a diagram illustrating an example of a functional configuration of a radio base station according to an embodiment. Note that, although this example will primarily show functional blocks that pertain to characteristic parts of the present embodiment, it may be assumed that the radio base station 10 has other functional blocks that are necessary for radio communication as well.

The base band signal processing section 104 at least has a control section (scheduler) 301, a transmission signal generation section 302, a mapping section 303, a received signal processing section 304 and a measurement section 305. Note that these configurations have only to be included in the radio base station 10, and some or all of these configurations may not be included in the base band signal processing section 104.

The control section (scheduler) 301 controls the whole of the radio base station 10. The control section 301 can be constituted by a controller, a control circuit or control apparatus that can be described based on general understanding of the technical field to which the present disclosure pertains.

For example, the control section 301 controls the generation of signals in the transmission signal generation section 302, the allocation of signals in the mapping section 303, and the like. Furthermore, the control section 301 controls the signal receiving processes in the received signal processing section 304, the measurements of signals in the measurement section 305, and so on.

The control section 301 controls scheduling (e.g., resource allocation) of system information, a downlink data signal (e.g., a signal transmitted using the downlink shared channel), and a downlink control signal (e.g., a signal transmitted using the downlink control channel). The control section 301 controls the generation of downlink control signals, downlink data signals and so on, based on the results of deciding whether or not retransmission control is necessary for uplink data signals, and so on.

The control section 301 controls the scheduling of synchronization signals (for example, the Primary Synchronization Signal (PSS)/Secondary Synchronization Signal (SSS)), downlink reference signals (for example, the CRS, the CSI-RS, the DMRS, etc.) and so on.

The control section 301 controls scheduling of uplink data signal (e.g., a signal transmitted using an uplink shared channel), an uplink control signal (e.g., a signal transmitted using an uplink control channel), a random access preamble, an uplink reference signal, and the like.

The transmission signal generation section 302 generates downlink signals (downlink control signals, downlink data signals, downlink reference signals and so on) based on instructions from the control section 301, and outputs these signals to the mapping section 303. The transmission signal generation section 302 can be constituted by a signal generator, a signal generating circuit or signal generation apparatus that can be described based on general understanding of the technical field to which the present disclosure pertains.

The transmission signal generation section 302 generates, in one example, at least one of DL assignment for notifying downlink data allocation information and UL grant for notifying uplink data allocation information on the basis of an instruction from the control section 301. DL assignments and UL grants are both DCI, and follow the DCI format. Also, the downlink data signals are subjected to the coding process, the modulation process and so on, by using coding rates and modulation schemes that are determined based on, for example, channel state information (CSI) reported from each user equipment 20.

The mapping section 303 maps the downlink signals generated in the transmission signal generation section 302 to certain radio resources based on instructions from the control section 301, and outputs these to the transmitting/receiving sections 103. The mapping section 303 can be constituted by a mapper, a mapping circuit or mapping apparatus that can be described based on general understanding of the technical field to which the present disclosure pertains.

The received signal processing section 304 performs receiving processes (for example, demapping, demodulation, decoding and so on) of received signals that are input from the transmitting/receiving sections 103. Here, the received signals include, for example, uplink signals (uplink control signals, uplink data signals, uplink reference signals, and so on) that are transmitted from the user equipment 20. The received signal processing section 304 can be constituted by a signal processor, a signal processing circuit or signal processing apparatus that can be described based on general understanding of the technical field to which the present disclosure pertains.

The received signal processing section 304 outputs information decoded by the receiving process to the control section 301. For example, when a PUCCH to contain an HARQ-ACK is received, the received signal processing section 304 outputs this HARQ-ACK to the control section 301. In addition, the received signal processing section 304 outputs at least one of the received signal and the signal after the receiving process to the measurement section 305.

The measurement section 305 conducts measurements with respect to the received signals. The measurement section 305 can be constituted by a measurer, a measurement circuit or measurement apparatus that can be described based on general understanding of the technical field to which the present disclosure pertains.

For example, the measurement section 305 may perform Radio Resource Management (RRM) measurements, Channel State Information (CSI) measurements and so on, based on the received signals. The measurement section 305 may measure the received power (for example, Reference Signal Received Power (RSRP)), the received quality (for example, Reference Signal Received Quality (RSRQ), Signal to Interference plus Noise Ratio (SINR), Signal to Noise Ratio (SNR), etc.), the signal strength (for example, Received Signal Strength Indicator (RSSI)), propagation path information (for example, CSI), and so on. The measurement results may be output to the control section 301.

Moreover, the transmitting/receiving section 103 can transmit the configuration information regarding measurement (or measurement report or reporting) for the channel state information (CSI) (e.g., at least one of CSI-MeasConfig information element (IE) of RRC, CSI-ResourceConfig IE, and CSI-ReportConfig IE, etc.) to the user equipment 20. The transmitting/receiving section 103 can receive the CSI transmitted from the user equipment 20.

(User equipment)

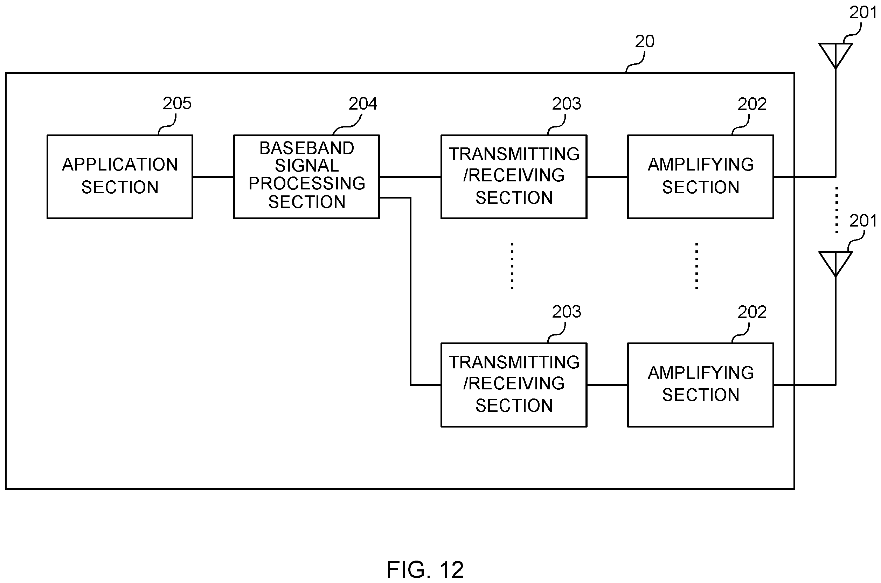

Fig. 12 is a diagram illustrating an example of an overall configuration of user equipment according to an embodiment. A user equipment 20 has a plurality of transmitting/receiving antennas 201, amplifying sections 202, transmitting/receiving sections 203, a base band signal processing section 204 and an application section 205. Note that one or more transmitting/receiving antennas 201, amplifying sections 202 and transmitting/receiving sections 203 may be provided.

Radio frequency signals that are received in the transmitting/receiving antennas 201 are amplified in the amplifying sections 202. The transmitting/receiving section 203 receives the downlink signal amplified in the amplifying section 202. The transmitting/receiving section 203 performs frequency conversion for the received signal into base band signal, and outputs the base band signal to the base band signal processing section 204. The transmitting/receiving section 203 can be constituted by a transmitter/receiver, a transmitting/receiving circuit or transmitting/receiving apparatus that can be described based on general understanding of the technical field to which the present disclosure pertains. Note that a transmitting/receiving section 203 may be structured as a transmitting/receiving section in one entity, or may be constituted by a transmitting section and a receiving section.

The base band signal processing section 204 performs receiving processes for the base band signal that is input, including an FFT process, error correction decoding, a retransmission control receiving process and so on. Downlink user data is forwarded to the application section 205. The application section 205 performs processes related to higher layers above the physical layer and the MAC layer and so on. Also, in the downlink data, the broadcast information can be also forwarded to the application section 205.

Meanwhile, uplink user data is input from the application section 205 to the base band signal processing section 204. The base band signal processing section 204 performs a retransmission control transmission process (for example, an HARQ transmission process), channel coding, precoding, a discrete Fourier transform (DFT) process, an IFFT process and so on, and the result is forwarded to the transmitting/receiving section 203.

Base band signals that are output from the base band signal processing section 204 are converted into a radio frequency band in the transmitting/receiving sections 203 and transmitted. The radio frequency signals that are subjected to frequency conversion in the transmitting/receiving sections 203 are amplified in the amplifying sections 202, and transmitted from the transmitting/receiving antennas 201.

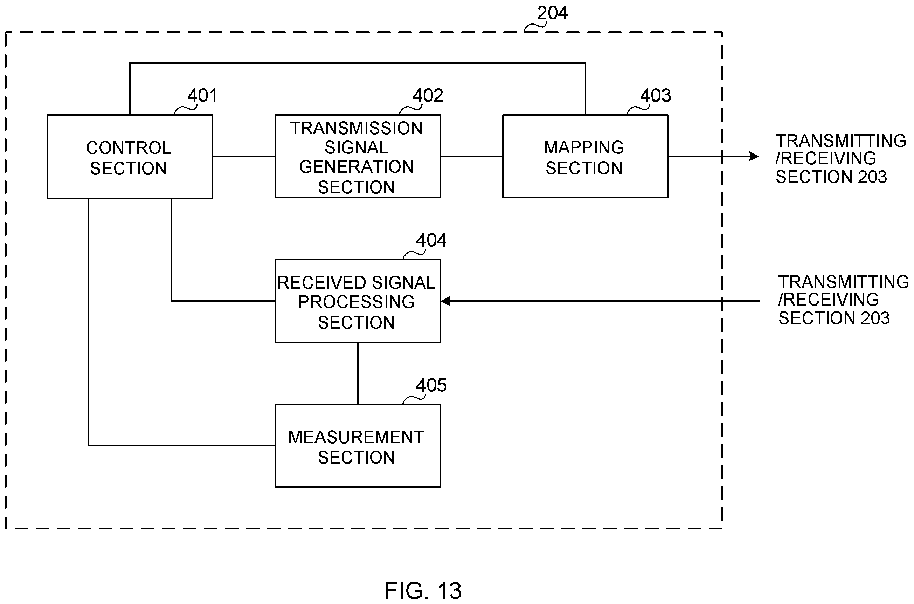

Fig. 13 is a diagram illustrating an example of a functional configuration of user equipment according to an embodiment. Note that, although this example will primarily show functional blocks that pertain to characteristic parts of the present embodiment, it may be assumed that the user equipment 20 has other functional blocks that are necessary for radio communication as well.

The base band signal processing section 204 provided in the user equipment 20 at least has a control section 401, a transmission signal generation section 402, a mapping section 403, a received signal processing section 404 and a measurement section 405. Note that these configurations may be included in the user equipment 20, and some or all of the configurations need not be included in the base band signal processing section 204.

The control section 401 controls the whole of the user equipment 20. The control section 401 can be constituted by a controller, a control circuit or control apparatus that can be described based on general understanding of the technical field to which the present disclosure pertains.

The control section 401, for example, controls the generation of signals in the transmission signal generation section 402, the allocation of signals in the mapping section 403, and so on. Furthermore, the control section 401 controls the signal receiving processes in the received signal processing section 404, the measurements of signals in the measurement section 405 and so on.

The control section 401 acquires the downlink control signal, the downlink data signal, or the like transmitted from the radio base station 10 through the received signal processing section 404. The control section 401 controls the generation of the uplink control signal, the uplink data signal, or the like on the basis of the downlink control signal or the like as a result of determining whether or not retransmission control for the downlink data signal is necessary.

The control section 401, when acquiring various types of information notified from the radio base station 10 through the received signal processing section 404, can update a parameter used for control on the basis of the acquired information.

The transmission signal generation section 402 generates uplink signals (uplink control signals, uplink data signals, uplink reference signals, and so on) based on instructions from the control section 401, and outputs these signals to the mapping section 403. The transmission signal generation section 402 can be constituted by a signal generator, a signal generating circuit or signal generation apparatus that can be described based on general understanding of the technical field to which the present disclosure pertains.

For example, the transmission signal generation section 402 generates uplink control signals such as delivery acknowledgement information, channel state information (CSI) and so on, based on instructions from the control section 401. Also, the transmission signal generation section 402 generates uplink data signals based on instructions from the control section 401. For example, when a UL grant is included in a downlink control signal that is reported from the radio base station 10, the control section 401 instructions the transmission signal generation section 402 to generate an uplink data signal.

The mapping section 403 maps the uplink signals generated in the transmission signal generation section 402 to radio resources based on instructions from the control section 401, and output the result to the transmitting/receiving section 203. The mapping section 403 can be constituted by a mapper, a mapping circuit or mapping apparatus that can be described based on general understanding of the technical field to which the present disclosure pertains.

The received signal processing section 404 performs receiving processes (for example, demapping, demodulation, decoding and so on) of received signals that are input from the transmitting/receiving sections 203. Here, the received signals include, for example, downlink signals (downlink control signals, downlink data signals, downlink reference signals, and so on) that are transmitted from the radio base station 10. The received signal processing section 404 can be constituted by a signal processor, a signal processing circuit or signal processing apparatus that can be described based on general understanding of the technical field to which the present disclosure pertains. Also, the received signal processing section 404 can constitute the receiving section according to the present disclosure.

The received signal processing section 404 outputs the decoded information that is acquired through the receiving processes to the control section 401. The received signal processing section 404 outputs, for example, broadcast information, system information, RRC signaling, DCI and so on, to the control section 401. In addition, the received signal processing section 404 outputs at least one of the received signal and the signal after the receiving process to the measurement section 405.

The measurement section 405 conducts measurements with respect to the received signals. The measurement section 405 can be constituted by a measurer, a measurement circuit or measurement apparatus that can be described based on general understanding of the technical field to which the present disclosure pertains. The measurement section 405 can constitute at least a part of the receiving section in the present disclosure.

For example, the measurement section 405 may perform RRM measurements, CSI measurements and so on based on the received signals. The measurement section 405 may measure the received power (for example, RSRP), the received quality (for example, RSRQ, SINR, SNR, etc.), the signal strength (for example, RSSI), propagation path information (for example, CSI), and so on. The measurement results may be output to the control section 401.

Moreover, the transmitting/receiving section 203 and the measurement section 405 may conduct measurements based on the configuration information regarding measurement (or measurement report or reporting) for the channel state information (CSI) (e.g., at least one of CSI-MeasConfig information element (IE) of RRC, CSI-ResourceConfig IE, CSI-ReportConfig IE, and so on).

The transmitting/receiving section 203 can transmit the CSI including the information (such as L1-RSRP, L1 interference power, L1-RSRQ, and L1-SINR) regarding the interference based on the above-mentioned measurement to the radio base station 10.

The transmitting/receiving section 203 may transmit the CSI including layer 1-reference signal received power (L1-RSRP) having interference larger than a certain threshold as the information regarding interference.

The transmitting/receiving section 203 can transmit the CSI, which includes the information regarding the above-mentioned interference but does not include L1-RSRP.

The transmitting/receiving section 203 and the measurement section 405 may be prevented from assuming, for a non-zero power CSI reference signal (NZP CSI-RS) resource set whose repetition is set to off via higher layer signaling, that resources within the resource set are transmitted with an same downlink spatial domain transmission filter.

The control section 401 can acquire a measurement result based on at least one of the L1-RSRP measurement resource and the interference measurement resource from the measurement section 405, and generate the CSI including the information regarding interference.

The control section 401 can determine the priority of the CSI report on the basis of whether or not the CSI report includes the information regarding interference.

(Hardware configuration)

Note that the block diagrams that have been used to describe the above embodiments illustrate blocks in functional units. These functional blocks (components) may be implemented in arbitrary combinations of at least one of hardware and software. Also, the method for implementing each functional block is not particularly limited. That is, each functional block may be achieved by a single apparatus physically or logically aggregated, or may be achieved by directly or indirectly connecting two or more physically or logically separate apparatuses (using wires, radio, or the like, for example) and using these plural apparatuses.

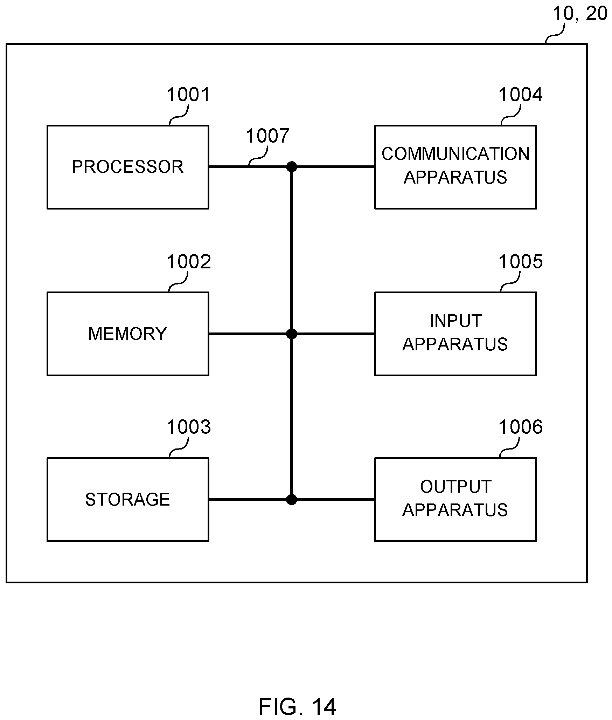

For example, the radio base station, user equipment, and so on according to embodiments of the present disclosure may function as a computer that executes the processes of the radio communication method of the present disclosure. Fig. 14 is a diagram illustrating an example of a hardware configuration of a radio base station and user equipment according to an embodiment. Physically, the above-described radio base stations 10 and user equipment 20 may be formed as a computer apparatus that includes a processor 1001, a memory 1002, a storage 1003, communication apparatus 1004, input apparatus 1005, output apparatus 1006 and a bus 1007.

Note that, in the following description, the wording "apparatus" may be replaced by "circuit," "device," "unit" and so on. Note that the hardware structure of a radio base station 10 and a user equipment 20 may be designed to include one or more of each apparatus shown in the drawings, or may be designed not to include part of the apparatus.

For example, although only one processor 1001 is shown, a plurality of processors may be provided. Furthermore, processes may be implemented with one processor, or processes may be implemented in sequence, or in different manners, on two or more processors. Note that the processor 1001 may be implemented with one or more chips.

Each function of the radio base station 10 and the user equipment 20 is implemented by reading certain software (program) on hardware such as the processor 1001 and the memory 1002, and by controlling the calculations in the processor 1001, the communication in the communication apparatus 1004, and at least one of the reading and writing of data in the memory 1002 and the storage 1003.

The processor 1001 may control the whole computer by, for example, running an operating system. The processor 1001 may be configured with a central processing unit (CPU), which includes interfaces with peripheral equipment, control apparatus, computing apparatus, a register and so on. For example, the above-described base band signal processing section 104 (204), call processing section 105 and so on may be implemented by the processor 1001.

Furthermore, the processor 1001 reads programs (program codes), software modules, or data, from at least one of the storage 1003 and the communication apparatus 1004, into the memory 1002, and executes various processes according to these. As for the programs, programs to allow computers to execute at least part of the operations of the above-described embodiments may be used. For example, the control section 401 of the user equipment 20 may be implemented by control programs that are stored in the memory 1002 and that operate on the processor 1001, and other functional blocks may be implemented likewise.

The memory 1002 is a computer-readable recording medium, and may be constituted by, for example, at least one of a read only memory (ROM), an erasable programmable ROM (EPROM), an electrically EPROM (EEPROM), a Random Access Memory (RAM) and/or other appropriate storage media. The memory 1002 may be referred to as a "register," a "cache," a "main memory (main storage device)" and so on. The memory 1002 can store a program (program code), a software module, and the like, which are executable for implementing the radio communication method according to the embodiment of the present disclosure.

The storage 1003 is a computer-readable recording medium, and may be constituted by, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving device) for performing inter-computer communication via at least one of a wired network and a wireless network, and for example, is referred to as "network device", "network controller", "network card", "communication module", and the like. The communication apparatus 1004 may be configured to include a high frequency switch, a duplexer, a filter, a frequency synthesizer and so on in order to implement, for example, at least one of frequency division duplex (FDD) and time division duplex (TDD). For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from the outside (for example, a keyboard, a mouse, a microphone, a switch, a button, a sensor and so on). The output apparatus 1006 is an output device for allowing output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these pieces of apparatus, including the processor 1001, the memory 1002 and so on are connected by the bus 1007 so as to communicate information. The bus 1007 may be formed with a single bus, or may be formed with buses that vary between pieces of apparatus.

Also, the radio base station 10 and the user equipment 20 may be structured to include hardware such as a microprocessor, a digital signal processor (DSP), an application-specific integrated circuit (ASIC), a programmable logic device (PLD), a field programmable gate array (FPGA) and so on, and part or all of the functional blocks may be implemented by the hardware. For example, the processor 1001 may be implemented with at least one of these pieces of hardware.

(Variations)

Note that the terminology described in the present disclosure and the terminology that is needed to understand the present disclosure may be replaced with other terms that convey the same or similar meanings. For example, at least one of "channels" and "symbols" may be replaced by "signals" (or "signaling"). The signal may also be a message. A reference signal may be abbreviated as an "RS", and may be referred to as a "pilot", a "pilot signal", and so on, depending on which standard applies. Furthermore, a "component carrier (CC)" may be referred to as a "cell," a "frequency carrier," a "carrier frequency" and so on.

A radio frame may be comprised of one or more periods (frames) in the time domain. Each of one or more periods (frames) constituting a radio frame may be referred to as a "subframe". Furthermore, a subframe may be comprised of one or more slots in the time domain. A subframe may be a fixed time duration (for example, 1 ms) that is not dependent on the numerology.

Here, the numerology can be a communication parameter applied to at least one of transmission and reception of a certain signal or channel. The numerology can indicate, in one example, at least one of subcarrier spacing (SCS), bandwidth, symbol length, cyclic prefix length, transmission time interval (TTI), the number of symbols per TTI, the radio frame configuration, particular filtering processing performed by the transceiver in frequency domains, particular windowing processing performed by a transceiver in time domains, and so on.

A slot may be comprised of one or more symbols in the time domain (orthogonal frequency division multiplexing (OFDM) symbols, single carrier frequency division multiple access (SC-FDMA) symbols, and so on). Also, a slot may be a time unit based on numerology.

A slot may include a plurality of mini slots. Each mini slot may be comprised of one or more symbols in the time domain. Also, a mini slot may be referred to as a "subslot." Each mini slot may be comprised of fewer symbols than a slot. A PDSCH (or PUSCH) transmitted in a time unit larger than a mini slot may be referred to as PDSCH (PUSCH) mapping type A. A PDSCH (or PUSCH) transmitted using a mini slot may be referred to as "PDSCH (PUSCH) mapping type B."

A radio frame, a subframe, a slot, a mini slot and a symbol all represent the time unit in signal communication. A radio frame, a subframe, a slot, a mini slot and a symbol may be each called by other applicable names. Moreover, the time units such as frames, subframes, slots, mini-slots, and symbols herein are used interchangeably.

For example, one subframe may be referred to as a "transmission time interval (TTI)," or a plurality of consecutive subframes may be referred to as a "TTI," or one slot or one mini-slot may be referred to as a "TTI." That is, at least one of a subframe and a TTI may be a subframe (1 ms) in the existing LTE, may be a shorter period than 1 ms (for example, one to thirteen symbols), or may be a longer period of time than 1 ms. Note that the unit to represent the TTI may be referred to as a "slot," a "mini slot" and so on, instead of a "subframe."

Here, a TTI refers to the minimum time unit of scheduling in radio communication, for example. For example, in LTE systems, a radio base station schedules the radio resources (such as the frequency bandwidth and transmission power that can be used in each user equipment) to allocate to each user equipment in TTI units. Note that the definition of TTIs is not limited to this.

The TTI may be the transmission time unit of channel-encoded data packets (transport blocks), code blocks, codewords and so on, or may be the unit of processing in scheduling, link adaptation and so on. Note that, when a TTI is given, a time interval (for example, the number of symbols) in which the transport blocks, the code blocks, the codewords, and the like are actually mapped may be shorter than the TTI.

Note that, when one slot or one mini slot is referred to as a "TTI," one or more TTIs (that is, one or multiple slots or one or more mini slots) may be the minimum time unit of scheduling. Also, the number of slots (the number of mini slots) to constitute this minimum time unit of scheduling may be controlled.

TTI having a time duration of 1 ms may be referred to as "normal TTI" (TTI in LTE Rel. 8 to 12), "normal TTI", "long TTI", a "usual subframe", a "normal subframe", a "long subframe", a "slot", or the like. A TTI that is shorter than a normal TTI may be referred to as "shortened TTI", "short TTI", "partial TTI" (or "fractional TTI"), "shortened subframe", "short subframe", "mini slot", "subslot", "slot", or the like.

Note that a long TTI (for example, a normal TTI, a subframe, etc.) may be replaced with a TTI having a time duration exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or a plurality of consecutive subcarriers in the frequency domain. The number of subcarriers included in the RB can be the same regardless of the numerology, and in one example, it can be 12. The number of subcarriers included in the RB can be determined on the basis of numerology.

Also, an RB may include one or more symbols in the time domain, and may be one slot, one mini slot, one subframe or one TTI in length. One TTI, one subframe, or the like each may be constituted as one or more resource blocks.

Note that one or more RBs may be referred to as a "physical resource block (PRB (Physical RB))," a "subcarrier group (SCG)," a "resource element group (REG)," a "PRB pair," an "RB pair" and so on.

Furthermore, a resource block may be comprised of one or more resource elements (REs). For example, one RE may be a radio resource field of one subcarrier and one symbol.

A bandwidth part (BWP) (also be referred to as a partial bandwidth) can represent a subset of consecutive common resource blocks (RBs) for a certain numerology in a certain carrier. Here, the common RB can be specified by the index of the RB using the common reference point of the carrier as a reference. The PRB can be defined in a certain BWP and be numbered within the BWP.

The BWP can include a BWP for UL (UL BWP) and a BWP for DL (DL BWP). For the UE, one or more BWPs can be configured in one carrier.

At least one of the configured BWPs can be active, and the UE may not necessarily assume that it will transmit and receive certain signals/channels outside the active BWP. Moreover, terms "cell", "carrier", and the like are herein used interchangeably with "BWP".

Note that the structures of radio frames, subframes, slots, mini slots, symbols and so on described above are merely examples. For example, configurations pertaining to the number of subframes included in a radio frame, the number of slots included in a subframe, the number of mini-slots included in a slot, the number of symbols and RBs included in a slot or a mini-slot, the number of subcarriers included in an RB, the number of symbols in a TTI, the symbol length, the length of cyclic prefixes (CPs) and so on can be variously changed.

Also, the information and parameters described in the present disclosure may be represented in absolute values or in relative values with respect to certain values, or may be represented using other applicable information. For example, a radio resource may be indicated by a certain index.

The names used for parameters and so on in the present disclosure are in no respect limiting. In addition, an equation and so on using these parameters may differ from those explicitly disclosed in the present disclosure. Since various channels (Physical Uplink Control Channel (PUCCH), Physical Downlink Control Channel (PDCCH) and so on) and information elements can be identified by any suitable names, the various names assigned to these individual channels and information elements are in no respect limiting.

The information, signals and/or others described in the present disclosure may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Further, information, signals and the like can be output in at least one of a direction from higher layers to lower layers and a direction from lower layers to higher layers. Information, signals and so on may be input and output via a plurality of network nodes.

The information, signals and so on that are input and/or output may be stored in a specific location (for example, in a memory), or may be managed in a control table. The information, signals, and so on that are input and/or output can be overwritten, updated, or appended. The information, signals, and so on that are output may be deleted. The information, signals and so on that are input may be transmitted to other pieces of apparatus.

The reporting of information is by no means limited to the aspects/embodiments described in the present disclosure, and may be performed using other methods. For example, reporting of information may be implemented by using physical layer signaling (for example, downlink control information (DCI), uplink control information (UCI), higher layer signaling (for example, Radio Resource Control (RRC) signaling, broadcast information (the master information block (MIB), system information blocks (SIBs) and so on), Medium Access Control (MAC) signaling and so on), and other signals and/or combinations of these.

Note that physical layer signaling may be referred to as "L1/L2 (Layer 1/Layer 2) control information (L1/L2 control signals)," "L1 control information (L1 control signal)" and so on. Also, RRC signaling may be referred to as "RRC messages", and can be, for example, an RRC connection setup message, RRC connection reconfiguration message, and so on. Also, MAC signaling may be reported using, for example, MAC control elements (MAC CEs).

Also, reporting of certain information (for example, reporting of information to the effect that "X holds") does not necessarily have to be sent explicitly, and can be sent implicitly (for example, by not reporting this piece of information, by reporting another piece of information, and so on).

Decisions may be made in values represented by one bit (0 or 1), may be made in Boolean values that represent true or false, or may be made by comparing numerical values (for example, comparison against a certain value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server or other remote sources by using at least one of wired technologies (coaxial cables, optical fiber cables, twisted-pair cables, digital subscriber lines (DSLs), and the like) and wireless technologies (infrared radiation, microwaves, and the like), at least one of these wired technologies and wireless technologies are also included in the definition of communication media.

The terms "system" and "network" as used in the present disclosure are used interchangeably.

The terms such as "precoding", "weight (precoding weight)", "antenna", "antenna element", "antenna port", "beam", and "panel" can be herein used interchangeably.

The terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier" can be herein used interchangeably. The base station may be called a term such as a "macro cell", a "small cell", a "femto cell", a "pico cell", and the like.

The base station can accommodate one or a plurality of (e.g., three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part or all of the coverage area of at least one of a base station and a base station subsystem that provides communication services within this coverage.

In the present disclosure, the terms "mobile station (MS)", "user equipment", "user equipment (UE)", "terminal", and so on may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other suitable terms.

At least one of a base station and a mobile station may be referred to as transmitting apparatus, receiving apparatus and so on. Note that at least one of the base station and the mobile station may be a device mounted on a mobile unit, a mobile unit itself, or the like. The mobile unit may be a vehicle (such as a car, an airplane, for example), an unmanned mobile unit (such as a drone, an autonomous vehicle, for example), or a robot (manned or unmanned). Note that at least one of the base station and the mobile station also includes a device that does not necessarily move during a communication operation.

Furthermore, the radio base stations in the present disclosure may be interpreted as user equipment. For example, each aspect/embodiment of the present disclosure may be applied to a configuration in which communication between a radio base station and a user equipment is replaced by communication among a plurality of user equipment (which may be referred to as, for example, Device-to-Device (D2D), Vehicle-to-Everything (V2X) and so on). In this case, the user equipment 20 may have the functions of the radio base stations 10 described above. In addition, the wording such as "uplink" and "downlink" may be interpreted as the wording corresponding to the terminal-to-terminal communication (for example, "side"). For example, an uplink channel and a downlink channel may be interpreted as a side channel.

Likewise, the user equipment in the present disclosure may be interpreted as radio base stations. In this case, the radio base stations 10 may have the functions of the user equipment 20 described above.

Certain actions that have been described in the present disclosure to be performed by base stations may, in some cases, be performed by their upper nodes. In a network comprised of one or more network nodes with base stations, it is clear that various operations that are performed so as to communicate with terminals can be performed by base stations, one or more network nodes (for example, Mobility Management Entities (MMEs), serving-gateways (S-GWs) and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts and so on that have been used to describe the aspects/embodiments in the present disclosure may be reordered as long as inconsistencies do not arise. For example, although various methods have been illustrated in the present disclosure with various components of steps using exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio(NR), New radio access (NX), Future generation radio access (FX), Global System for Mobile communications (registered trademark) (GSM), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and/or next generation systems that are enhanced based on these. Further, a plurality of systems may be combined and applied (for example, a combination of LTE or LTE-A and 5G).

The phrase "based on" as used in the present disclosure does not mean "based only on", unless otherwise specified. In other words, the phrase "based on" means both "based only on" and "based at least on."

Reference to elements with designations such as "first," "second" and so on as used in the present disclosure does not generally limit the number/quantity or order of these elements. These designations are used in the present disclosure only for convenience, as a method for distinguishing between two or more elements. In this way, reference to the first and second elements does not imply that only two elements may be employed, or that the first element must precede the second element in some way.

The terms "judge" and "determine" as used in the present disclosure may encompass a wide variety of actions. For example, "determining" may be regarded as "determining" judging, calculating, computing, processing, deriving, investigating, looking up (for example, looking up for in a table, database, or another data structure), ascertaining, and the like.

Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on.

In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

In addition, to "judge" and "determine" as used herein may be interpreted to mean "assuming", "expecting", "considering" and so on.

As used in the present disclosure, the terms "connected" and "coupled," or any variation of these terms, mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be replaced by "access".

As used in the present disclosure, when two elements are connected, these elements may be considered "connected" or "coupled" to each other by using one or more electrical wires, cables, printed electrical connections, and the like, and, as some non-limiting and non-inclusive examples, by using electromagnetic energy, such as electromagnetic energy having wavelengths in the radio frequency, microwave, and optical (both visible and invisible) domains.

In the present disclosure, the phrase "A and B are different" may mean "A and B are different from each other." Moreover, this term can mean that "A and B are different from C". The terms such as "separate" or "coupled" can be similarly interpreted as "different".

When the terms such as "include," "including", and variations of these are used in the present disclosure, these terms are intended to be inclusive, in a manner similar to the way the term "comprising" is used. Furthermore, the term "or" as used in the present disclosure is intended to be not an exclusive-OR.

In the present disclosure, where translations add articles, such as a, an, and the in English, the present disclosure may include that the noun that follows these articles is in the plural.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of the claims. Consequently, the description in the present disclosure is provided only for the purpose of explaining examples, and should by no means be construed to limit the invention according to the present disclosure in any way.

**Claims**

1. A user equipment comprising:

   a receiving section configured to perform measurement on a basis of configuration information regarding measurement for channel state information (CSI); and
   a transmitting section configured to transmit the CSI including information regarding interference based on the measurement.

2. The user equipment according to claim 1, wherein the transmitting section transmits the CSI including layer 1-reference signal received power (L1-RSRP) having interference larger than a certain threshold as the information regarding interference.

3. The user equipment according to claim 1, wherein the transmitting section transmits the CSI that includes the information regarding interference and does not include layer 1-reference signal received power (L1-RSRP).

4. The user equipment according to any one of claims 1 to 3, further comprising a control section configured to determine a priority level of a CSI report on a basis of whether or not the CSI report includes the information regarding interference.

5. The user equipment according to any one of claims 1 to 4, wherein the receiving section does not assume, for a non-zero power CSI reference signal (NZP CSI-RS) resource set whose repetition is set to off via higher layer signaling, that resources within the resource set are transmitted with an same downlink spatial domain transmission filter.

6. A radio communication method comprising:

   performing measurement on a basis of configuration information regarding measurement for channel state information (CSI); and
   transmitting the CSI including information regarding interference based on the measurement.

FIG. 1

BEAM 1-1

TRP1

BEAM 1-2

BEAM 1-3

BEAM 1-4

BEAM 2-1

BEAM 1

UE

BEAM 2

TRP2

BEAM 2-2

BEAM 2-3

BEAM 2-4

FIG. 2

BEAM 1-1

BEAM 1-2

TRP1

BEAM 1-3

BEAM 1-4

DL TRANSMISSION
BEAM 2-1

BEAM 1

UE

UL RECEPTION
BEAM 1-1

BEAM 2

UL RECEPTION
BEAM 1-2

DL TRANSMISSION
BEAM 2-2

TRP2

DL TRANSMISSION
BEAM 2-3

UL RECEPTION
BEAM 1-3

UL RECEPTION
BEAM 1-4

DL TRANSMISSION
BEAM 2-4

EP 3 809 744 A1

| | |
|---|---|
| ▨ (hatched) | L1-RSRP MEASUREMENT RESOURCE |
| ▨ (dotted) | INTERFERENCE MEASUREMENT RESOURCE |
| ▦ (grid) | L1-RSRP REPORT RESOURCE |
| ▨ (crosshatch) | INTERFERENCE REPORT RESOURCE |

FIG. 3

EP 3 809 744 A1

EP 3 809 744 A1

FIG. 4A

D

SLOT

TIME

L1-RSRP MEASUREMENT RESOURCE

FIG. 4B

D

SLOT

TIME

L1-RSRP MEASUREMENT RESOURCE

INTERFERENCE MEASUREMENT RESOURCE

## FIG. 5A

| a | b | c | d | e | f | g | h |

D

←————————————————→
SLOT

→
TIME

▨ L1-RSRP MEASUREMENT RESOURCE

## FIG. 5B

| a | b | c | d | e | f | g | h |
| a | b | c | d | e | f | g | h |

D

←————————————————→
SLOT

→
TIME

▨ L1-RSRP MEASUREMENT RESOURCE

▨ INTERFERENCE MEASUREMENT RESOURCE

FIG. 6A

L1-RSRP MEASUREMENT RESOURCE

D

SLOT

TIME

EP 3 809 744 A1

FIG. 6B

L1-RSRP MEASUREMENT RESOURCE

INTERFERENCE MEASUREMENT RESOURCE

D

SLOT

TIME

## FIG. 7A

| 1 | 1 | 1 | 1 | 1 | 1 | 1 | 1 |

D

SLOT

TIME

▨ L1-RSRP MEASUREMENT RESOURCE

## FIG. 7B

| 1 | 1 | 1 | 1 | 1 | 1 | 1 | 1 |
| 1 | 1 | 1 | 1 | 1 | 1 | 1 | 1 |

D

SLOT

TIME

▨ L1-RSRP MEASUREMENT RESOURCE

▨ INTERFERENCE MEASUREMENT RESOURCE

EP 3 809 744 A1

## FIG. 8A

| 1 | 2 | 3 | 4 | 5 | 6 | 7 | 8 |

D

SLOT

TIME

▨ L1-RSRP MEASUREMENT RESOURCE

## FIG. 8B

| 1 | 2 | 3 | 4 | 5 | 6 | 7 | 8 |
| 1 | 2 | 3 | 4 | 5 | 6 | 7 | 8 |

D

SLOT

TIME

▨ L1-RSRP MEASUREMENT RESOURCE

▦ INTERFERENCE MEASUREMENT RESOURCE

EP 3 809 744 A1

40

CORE NETWORK

30

1

HIGHER STATION
APPARATUS

C1

12a

12c

11

C2

C2

BACKHAUL
LINK

C2

20

12b

FIG. 9

EP 3 809 744 A1

TO HIGHER STATION
APPARATUS 30 OR TO
OTHER RADIO BASE
STATIONS 10

106
COMMUNICATION
PATH INTERFACE

104
BASEBAND
SIGNAL
PROCESSING
SECTION

103
TRANSMITTING
/RECEIVING
SECTION

102
AMPLIFYING
SECTION

105
CALL
PROCESSING
SECTION

103
TRANSMITTING
/RECEIVING
SECTION

102
AMPLIFYING
SECTION

10

101

101

101

FIG. 10

FIG. 11

EP 3 809 744 A1

FIG. 12

EP 3 809 744 A1

FIG. 13

10, 20

1001

PROCESSOR

1007

1004

COMMUNICATION
APPARATUS

1002

MEMORY

1005

INPUT
APPARATUS

1003

STORAGE

1006

OUTPUT
APPARATUS

FIG. 14

## INTERNATIONAL SEARCH REPORT

| International application No. |
|---|
| PCT/JP2018/022933 |

| A. CLASSIFICATION OF SUBJECT MATTER |
|---|
| Int.Cl. H04W24/10(2009.01)i, H04W16/28(2009.01)i |

According to International Patent Classification (IPC) or to both national classification and IPC

| B. FIELDS SEARCHED |
|---|
| Minimum documentation searched (classification system followed by classification symbols)<br>Int.Cl. H04B7/24-7/26, H04W4/00-99/00 |

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y<br>A | WO 2017/195724 A1 (MITSUBISHI ELECTRIC CORPORATION) 16 November 2017, paragraphs [0111], [0127], [0130], [0187]-[0195]<br>(Family: none) | 1-2, 6<br>3<br>4-5 |
| Y | US 2013/0288730 A1 (MARVELL WORLD TRADE LTD.) 31 October 2013, paragraph [0039]<br>& WO 2013/160795 A1 & KR 10-2015-0009980 A & CN 104521269 A | 3 |

☐ Further documents are listed in the continuation of Box C.     ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 23.08.2018 | 04.09.2018 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0,* April 2010